# EUROPÄISCHE PATENTSCHRIFT

(11) **EP 2 801 250 B1**
(45) Veröffentlichungstag und Bekanntmachung des Hinweises auf die Patenterteilung: **20.07.2016**
(21) Anmeldenummer: 14167327.7
(22) Anmeldetag: 07.05.2014
(51) Int. Cl.: A01G 9/12

(54) **Pflanzengerüst, Pflanzengerüstsystem und Verwendung eines Pflanzengerüsts und Pflanzengerüstsystems**
Plant support, plant support system and use of a plant support and plant support system
Structure pour plantes, système de structure pour plantes et leur utilisation

(30) Priorität: 08.05.2013 DE 102013008000
(43) Veröffentlichungstag der Anmeldung: 12.11.2014
(73) Patentinhaber: Huemer, Jörg, 4661 Roitham (AT)
(72) Erfinder: Huemer, Jörg, 4661 Roitham (AT)
(74) Vertreter: Schmidt, Steffen J.

(56) Entgegenhaltungen:
- EP-A1- 2 090 155
- CH-A- 344 255
- DE-U1-202008 000 300

## Beschreibung

Die vorliegende Erfindung betrifft ein Pflanzengerüst, ein Pflanzengerüstsystem sowie eine Verwendung für ein solches Pflanzengerüst oder ein solches Pflanzengerüstsystem.

Zum Stabilisieren von Pflanzentrieben, beispielsweise um ein Fortschreiten einer wind- oder wetterbedingten Schädigung bei Freilandpflanzen zu verhindern, werden üblicherweise Pflanzengerüste verwendet, an denen Pflanzentriebe durch Anbinden wieder aufgerichtet werden. Klassische Vertreter solcher Pflanzengerüste sind Stangen, z. B. aus Bambus. Solche Stangen werden üblicherweise händisch oder unter Zuhilfenahme von Werkzeugen abschnittsweise in den Erdboden in der Nähe des zu stützenden Pflanzentriebes eingeführt und somit fixiert. Anhand von Bindematerialien oder Klemmen lässt sich der Pflanzentrieb an einer einzelnen Stange oder an mehreren Stangen befestigen, wodurch er stabilisiert wird.

Auch bei gegen Wind und Wetter geschützten Zimmer- bzw. Topfpflanzen kommen Pflanzengerüste zum Einsatz. Hierbei dient die Stabilisierung des Pflanzentriebs gewöhnlich dazu, einer Beschädigung des Pflanzentriebs durch sein Eigengewicht vorzubeugen oder das Fortschreiten einer extrinsisch der Pflanze zugeführten Beschädigung zu verhindern. Pflanzengerüste werden ferner für ästhetische Zwecke eingesetzt, wenn beispielsweise die Wachstumsrichtung von Pflanzentrieben vorgegeben sein soll.

Entsprechend der Vielfalt an Pflanzengattungen existieren diverse gattungsspezifisch geformte Pflanzengerüste. Für Rosen sowie andere Schling- und Kletterpflanzen werden üblicherweise Obelisken, Rundbögen oder Wandspaliere eingesetzt. Eine Pflanzenstütze zum Stützen von Orchideen ist in dem Dokument EP 2090155 A1 beschrieben. Diese Pflanzenstütze weist einen senkrecht aufstellbaren Hauptträger und mehrere daran angeordnete spiralförmige gewundene Halteelemente auf. Die Halteelemente sind beispielsweise in unterschiedlichen Höhen senkrecht übereinander angeordnet oder relativ zueinander mit unterschiedlicher Orientierung an dem Hauptträger angeordnet und aus Draht oder als Spritzgussteil gefertigt.

Ein Pflanzengerüst zum Aufbinden von Pflanzen ist aus dem Dokument DE 8107765 U1 bekannt. Es besteht aus einer Gerüststange mit seitlich wegstehenden Stabelementen, wobei die Stabelemente dabei ausschließlich einendig an der Gerüststange angeordnet sind und somit über ein freies Ende verfügen. Ein aufzubindender Pflanzentrieb kann daher von der Seite der freien Enden der Stabelemente aus in den Bereich zwischen zwei Stabelementen eingeführt werden, wobei größere Trieblängen zickzackförmig bzw. slalomförmig durch mehrere Bereiche zwischen zwei jeweils benachbarten Stabelementen hindurchgeführt werden.

Aus dem Dokument DE 20 2008 000 300 U1 ist eine Pflanzenstützvorrichtung bekannt, die aus mindestens zwei Haltestangen und aus einem oder mehreren Verbindungselement oder Verbindungselementen besteht. Dabei sind die lösbaren Verbindungselemente quer zu den Haltestangen angeordnet. Die Verbindungselemente weisen Haltemittel auf, mittels derer ein Pflanzenabschnitt einer zu stützenden Pflanze fixierbar ist. Dabei sind die Verbindungselemente aus einer ebenen Platte gebildet, in die Aufnahmeeinrichtungen eingebracht sind, die als seitliche Querausnehmung ausgestaltet sind.

Das Dokument CH 344255 (A) offenbart einen Pflanzenhalter bestehend aus einem Rundstab und aus einem Nabenring. Der Rundstab dient der Befestigung in der Erde und der Nabenring ist mit einem gummielastischen Einsatzring versehen. Somit ist der Nabenring auf und abschiebbar entlang des Rundstabes angeordnet. Des Weiteren ist der Nabenring mit radial abstehenden Speichen besetzt, wobei mindestens zwei äußere Speichenenden durch ein Umfangsteil verbunden sind.

Der vorliegenden Erfindung liegt die Aufgabe zugrunde, ein Pflanzengerüst und ein Pflanzengerüstsystem bereitzustellen, das vielseitig einsetzbar ist und gleichzeitig einfach hergestellt und transportiert werden kann. Ferner liegt der Erfindung die Aufgabe zugrunde, eine Verwendung eines Pflanzengerüsts und eines Pflanzengerüstsystems dieser Art bereitzustellen.

Das Pflanzengerüst ist für die unkomplizierte Anwendung in Freiland sowie für Kübel- und Dachgartenpflanzen vorgesehen und kommt ohne zusätzliche Befestigungsmittel aus. Es ist dazu geeignet, den natürlichen Habitus bzw. das ästhetische Optimum der jeweiligen Pflanze sowohl prophylaktisch abzusichern, als auch bei eingetretenem Schaden zu rekonstruieren.

Diese Aufgabe wird durch ein Pflanzengerüst mit den Merkmalen des Anspruchs 1, durch ein Pflanzengerüst mit den Merkmalen des Anspruchs 9, durch ein Pflanzengerüstsystem mit den Merkmalen des Anspruchs 12 sowie durch eine Verwendung eines Pflanzengerüsts oder eines Pflanzengerüstsystems mit den Merkmalen des Anspruchs 13 gelöst.

Ein Pflanzengerüst zum Stützen von Pflanzen umfasst einen Stangenaufsatz zum Tragen von flachen Halteelementen, der dazu eingerichtet ist, eine längliche vertikal ausrichtbare Stange aufzunehmen. Der Stangenaufsatz umfasst ein im Wesentlichen H-förmiges Aufsatzteil mit einem ersten Schlitz, einer ersten Aussparung und einem zwischen dem ersten Schlitz und der ersten Aussparung ausgebildeten ersten Verbindungssteg. Die erste Aussparung ist durch zwei erste im Wesentlichen parallele Schenkel seitlich begrenzt. Die ersten Schenkel sind anhand des ersten Verbindungsstegs miteinander verbunden. Der erste Schlitz und die erste Aussparung erstrecken sich ausgehend von dem ersten Verbindungssteg in zueinander entgegengesetzte Richtungen.

Der Stangenaufsatz umfasst ferner ein im Wesentlichen U-förmiges Aufsatzteil mit einer zweiten Aussparung und einem von dieser ausgehenden zweiten Schlitz. Die zweite Aussparung ist dabei durch zwei zweite im Wesentlichen parallele Schenkel seitlich begrenzt.

Das H-förmige Aufsatzteil und das U-förmige Aufsatzteil sind flach. Das H-förmige Aufsatzteil ist dazu eingerichtet, auf einem ersten Ende der Stange aufgesteckt zu sein, wobei auf dem H-förmigen Aufsatzteil das U-förmige Aufsatzteil gegenüber dem H-förmigen Aufsatzteil überkreuzt aufgesteckt ist. Dabei befindet sich der erste Schlitz mit dem zweiten Schlitz in Eingriff, so dass die beiden ersten Schenkel und die beiden zweiten Schenkel eine erste Einfassung bilden, damit die Stange in dieser ersten Einfassung von den ersten und zweiten Schenkeln an ihrem Umfang einzuspannen ist. Die Stange ist dabei vorzugsweise passgenau einzuspannen. Die Stange kann optional fest einzuspannen sein.

Wenn sich der erste Schlitz mit dem zweiten Schlitz in Eingriff befindet, befinden sich die Basis des ersten Schlitzes, also der innerste Punkt des ersten Schlitzes, und die Basis des zweiten Schlitzes, also der innerste Punkt des zweiten Schlitzes vorzugsweise in Kontakt.

Da der Stangenaufsatz dazu eingerichtet ist, auf eine bereits in den Erdboden eingesteckte Stange beliebiger Länge aufsetzbar zu sein, ist das Pflanzengerüst im Wesentlichen unabhängig von der Beschaffenheit des Untergrunds einsetzbar. Das Pflanzengerüst ist auf eine Stange aufsetzbar, die aus einem beliebigen Material hergestellt ist. Die Stange kann aus Metall, beispielsweise Edelstahl, Stahl oder Aluminium, aus Holz oder aus Kunststoff, jeweils als Vollzylinder oder Hohlzylinder gefertigt sein. Für harten oder steinigen Untergrund im Freiland ist insbesondere eine Stange aus einem schlagfesten Material, beispielsweise aus Stahl vorgesehen, die mittels eines Hammers in den Boden eingetrieben sein kann.

An dem Pflanzengerüst können an einem der zweiten Schenkel des U-förmigen Aufsatzteils oder des H-förmigen Aufsatzteils voneinander beabstandete Stufen ausgebildet sein. Auf diesen Stufen können die Halteelemente aufliegen. Die Halteelemente können ferner jeweils eine Aussparung aufweisen, die dazu eingerichtet ist, die Stange und den ersten Schenkel hindurchragend aufzunehmen, wodurch die Halteelemente horizontal gehalten sind. Vorzugsweise weisen die Halteelemente einen oder mehrere hakenförmige Abschnitte zum Fixieren von Abschnitten von Pflanzentrieben auf. Die Halteelemente ermöglichen somit, dass zeit- und materialsparend mittels einer einzigen Stange mehrere zueinander horizontal beabstandete Triebe stabilisiert sind, so dass ein Einführen mehrerer Stangen in das Erdreich und damit in Verbindung stehende Schädigungen im Wurzelbereich vermieden werden.

Die spezielle Ausformung der Halteelemente ermöglicht es, flexibel und gleichmäßig verteilt Pflanzenelemente aufnehmen, wodurch der originale lockere Habitus der Pflanze rekonstruiert oder prophylaktisch gesichert werden kann. Die flach ausgeführten Halteelemente dienen auch dem Tragen von Lasten über dem Erdboden. Sie können dazu geeignet sein, aufliegende Früchte oder mit Wurzelsubstrat gefüllte Gefäße zu Vermehrungszwecken durch Absenker oder, speziell bei Verwendung für Zimmerpflanzen, mit Wasser gefüllte Gefäße zur lokalen Erhöhung der Luftfeuchte zu tragen.

Anhand der Stufen können mehrere, optional unterschiedlich geformte Halteelemente übereinander angeordnet werden. Die Stufen können dem Tragen von Halteelementen für einen oder zwei solitäre Pflanzentriebe dienen.

Auf einem Halteelement kann ein Verschlusselement aufliegen. Dieses Verschlusselement, kann über die Stufen hinweg entlang der Stange und entlang des Schenkels vertikal verschiebbar sein. Ferner kann das Verschlusselement von dem Schenkel verdrehsicher gehalten sein. Nach Einführen des zu sichernden Pflanzentriebes kann das Verschlusselement dabei Öffnungen in der Kontur des Halteelements verschließen.

Das Halteelement kann alternativ als Unterlage für ein Etikett dienen. Dazu kann es auch als Platte ausgestaltet sein. Diese Platte kann entweder direkt beschriftbar sein, oder kann als Träger für ein aufliegendes Etikett fungieren. Zur Fixierung des Etiketts kann ein Rahmenteil auf dem vom Halteelement getragenen Etikett aufliegen und so das Etikett im Randbereich beschwerend einspannen. Das Rahmenteil kann dabei fixierend aufliegen. Das Etikett kann elastisch sein und dazu eingerichtet sein, an der Stange angesteckt zu sein.

Eine Sonderform eines Halteelementes, die sich aus gärtnerischer Praxis als sinnvoll erwiesen hat, verfügt über einen doppelten Greifer in zwei entgegengesetzte Richtungen, dessen Eingänge zu zwei separaten inneren Öffnungen durch ein aufliegendes Verschlusselement verschlossen werden können, das in angehobener Position ein paralleles Einführen solitärer Triebe zulässt.

In einer bevorzugten Ausführungsform des Pflanzengerüsts weisen das H-förmige Aufsatzteil und das U-förmige Aufsatzteil jeweils zwei horizontale Ausleger auf, die eine Auflageebene definieren. Die zwei Ausleger können zusammenwirkend ein Halteelement in der Auflageebene tragen. Der Stangenaufsatz durchsetzt dabei das Halteelement im Bereich einer zentralen kreuzförmigen Ausnehmung.

Das Halteelement kann in seiner Außenkontur Öffnungen zu Aussparungen des Halteelements aufweisen. Die Aussparungen können zumindest abschnittsweise labyrinthartig ausgestaltet sein. Vorzugsweise sind die Aussparungen des gesamten Halteelements labyrinthartig ausgestaltet. Alternativ können die Aussparungen jedoch auch ganzheitlich oder abschnittsweise hakenförmig oder rahmenförmig ausgestaltet sein. Wenn die Aussparungen labyrinthartig ausgebildet sind, können selbst voll entwickelte Pflanzentriebe durch seitliches Einführen unverlierbar gehalten werden. Zur Befestigung der Pflanzentriebe werden keine weiteren Hilfsmittel benötigt.

Das Halteelement kann optional selbst durch einen Ring mit kreuzförmiger Ausnehmung horizontal fixiert sein, deren Kontur in einer horizontalen Drehposition größenmäßig ausreicht, von den zusammengesteckten Aufsatzteilen und durchsetzt zu werden, so dass er zentral auf das Halteelement aufgelegt werden und mittels Drehung mit seinen vier nach innen ansteigend breiter werdenden Flügeln in passgenaue Aussparungen der Aufsatzteile bewegt werden kann, bis er durch leichte Spannung in seiner endgültigen Position einrastet.

Anhand dieses Halteelements kann ein bereits solitär mit einem hakenförmigen Halteelement gestützter Trieb in größerer Höhe auch dann mit einer optimalen Stütze zu versorgt sein, wenn er sich dort mehrfach verzweigt._Dies hat den Vorteil, dass nicht bereits in früheren Entwicklungsstadien der Pflanze das gesamte Spalier in der erwarteten Endhöhe die Optik dominiert und dass auf unerwartetes Höhenwachstum problemlos reagiert werden kann. Für Schling- und Kletterpflanzen ergeben sich bei Freilandverwendung aus dieser Konstruktion bisher ungeahnte Möglichkeiten freigestellter, solitärer Verwendung. Bei Verwendung für Kübelpflanzen besteht Stabilisierungsbedarf analog zu horstbildenden Freilandstauden, überwiegend aber im Sortiment geeigneter Schling- und Kletterpflanzen, bei welchen das Spalier bedarfsorientiert mit der Pflanze mitwachsen kann.

Die labyrinthartigen Aussparungen zeichnen sich dadurch aus, dass sie spontan die Richtung wechseln. Dadurch wird es ermöglicht, Pflanzentriebe an verschiedensten Stellen dieser Binnenformation einrasten zu lassen und dadurch jeden Trieb z. B. einer horstig wachsenden Staude in einer individuellen Position zu fixieren. Da es für die Statik der Pflanzentriebe ausreicht, ein so strukturiertes Halteelement unterhalb ihrer vertikalen Mitte einzusetzen, ist es im praktischen Anwendungsfall nahezu unsichtbar, weil es von Blattwerk und ggf. kleinen Seitentrieben und Blüten verdeckt wird. Solche Halteelemente ermöglichen daher eine prophylaktische Sicherung bzw. nach Auseinanderfallen eines Horstes infolge von Sturm und Regengewicht eine Rekonstruktion seines ästhetisch optimalen, lockeren, natürlichen Habitus mit wenigen Handgriffen, indem zunächst die zentralsten, dann die weiter vom Zentrum entfernten Triebe durch die Eingänge in das über der Horstmitte von der Stange gehaltene Horizontalelement eingeführt und an gewünschter Stelle arretiert werden.

In einer bevorzugten Ausführungsform weist das H-förmige Aufsatzteil einen ersten bogenförmig verlängerten Schenkel und einen bezüglich einer Mittenachse des H-förmigen Aufsatzteils dazu symmetrischen zweiten bogenförmig verlängerten Schenkel und das U-förmige Aufsatzteil eine bogenförmige Verlängerung auf. Einer oder mehrere der verlängerten Schenkel können jeweils an ihrem distalen Ende eine gabelartige Greifvorrichtung mit einer zu der Stange hin gerichteten Öffnung aufweisen, die ein Halteelement tragen. Zur Stabilisierung kann das Halteelement ferner eine Bohrung aufweisen, die von der Stange durchsetzbar ist. Das Halteelement weist in dieser Ausführung vorzugsweise eine labyrinthartige Binnenstruktur auf, die auf der stangenabgewandten Seite über keine Eingänge zum Einführen von Pflanzentrieben verfügt. Ein solcher Stangenaufsatz wird insbesondere den speziellen Erfordernissen zum Stabilisieren von Trieben horstförmiger Stauden im Lebensbereich Gehölz/Rand nach dem Schlüssel von Prof. Sieber gerecht, welche aufgrund ihrer einseitigen Ausrichtung zum Licht spezielle Stabilisierungserfordernisse haben. Insbesondere bei Freilandverwendung können von dieser Spalierform alternativ_Ampelpflanzen in einer vorbestimmten Höhe über dem Erdboden getragen und die herabhängenden Triebe vertikal und radial um die Pflanze angeordnet fixiert werden.

In einer bevorzugten Ausführungsform umfasst das Pflanzengerüst ferner einen Standfuß zum Stützen der Stange in einer vertikalen Ausrichtung. Der Standfuß umfasst ein im Wesentlichen H-förmiges Fußteil mit einem dritten Schlitz, einer dritten Aussparung und einem zwischen dem dritten Schlitz und der dritten Aussparung ausgebildeten zweiten Verbindungssteg. Die dritte Aussparung ist durch zwei dritte im Wesentlichen parallele Schenkel seitlich begrenzt. Die dritten Schenkel sind anhand des zweiten Verbindungsstegs miteinander verbunden und der dritte Schlitz und die dritte Aussparung erstrecken sich ausgehend von dem zweiten Verbindungssteg in zueinander entgegengesetzte Richtungen. Der Standfuß umfasst ferner ein im Wesentlichen U-förmiges Fußteil mit einer vierten Aussparung und einem von dieser ausgehenden vierten Schlitz. Die vierte Aussparung ist durch zwei vierte im Wesentlichen parallele Schenkel seitlich begrenzt. Das H-förmige Fußteil und das U-förmige Fußteil sind flach. Ferner ist das H-förmige Fußteil dazu eingerichtet, auf einem zweiten Ende der Stange aufgesteckt zu sein, und das U-förmige Fußteil ist dazu eingerichtet auf dem H-förmigen Fußteil gegenüber dem H-förmigen Fußteil überkreuzt aufgesteckt zu sein, so dass sich der dritte Schlitz mit dem vierten Schlitz in Eingriff befindet. Die beiden dritten Schenkel und die beiden vierten Schenkel bilden dabei eine zweite Einfassung, damit die Stange in dieser zweiten Einfassung von den dritten und vierten Schenkeln an ihrem Umfang einzuspannen ist.

Der Standfuß kann alternativ oder zusätzlich als Stangenaufsatz verwendet werden, um Gefäße mit Ampelpflanzen zentral über der Stange zu tragen. Dies erlaubt ein gleichmäßiges Fixieren herabhängender Pflanzentriebe unter der Pflanze in radialer Anordnung.

In einer bevorzugten Ausführungsform umfasst das Pflanzengerüst einen Verbindungsadapter, der ein erstes und ein zweites im Wesentlichen H-förmiges Verbindungsteil umfasst. Das erste H-förmige Verbindungsteil weist eine fünfte und eine sechste Aussparung und einen fünften Schlitz auf und das zweite H-förmige Verbindungsteil weist eine siebte und eine achte Aussparung und einen sechsten Schlitz auf. Dabei ist die fünfte Aussparung durch zwei im Wesentlichen parallele fünfte Schenkel die sechste Aussparung durch zwei im Wesentlichen parallele sechste Schenkel die siebte Aussparung durch zwei im Wesentlichen parallele siebte Schenkel und die achte Aussparung durch zwei im Wesentlichen parallele achte Schenkel seitlich begrenzt.

Die Innenkontouren des ersten und des zweiten Verbindungsteils können bezüglich einer gemeinsamen Mittensymmetrieachse symmetrisch sein und das erste und das zweite Verbindungsteil können überkreuzt zusammengesteckt sein. Genauer ist auf dem ersten H-förmigen Verbindungsteil das zweite H-förmige Verbindungsteil gegenüber dem ersten H-förmigen Verbindungsteil überkreuzt aufgesteckt, so dass sich der fünfte Schlitz mit dem sechsten Schlitz in Eingriff befindet.

Die beiden sechsten Schenkel und die beiden achten Schenkel bilden eine dritte Einfassung, damit die Stange in dieser dritten Einfassung fest einzuspannen ist. Ferner bilden die beiden fünften Schenkel und die beiden siebten Schenkel eine zusätzliche Einfassung, damit eine zusätzliche Stange von den fünften und siebten Schenkeln an ihrem Umfang fest einzuspannen ist.

Der Verbindungsadapter kann zum Erweitern des Pflanzengerüsts in vertikale Richtung vorgesehen sein. So können mehrere kurze Stangen anstatt einer langen Stange anhand des Verbindungsadapters verbunden werden. Die Stangen können optional unterschiedliche Durchmesser aufweisen. Ferner kann dadurch vermieden werden, dass das Pflanzengerüst in Entwicklungsstadien die Höhe der Pflanze übersteigt, mit der ästhetischen Zielsetzung, seine Verwendung möglichst unauffällig zu halten.

Dieser Verbindungsadapter ist vorzugsweise in seiner Außenkontur so geformt, dass er über Ausbuchtungen (stufenartige Verbreiterungen) verfügt, welche wie kleine Ausleger eine gemeinsame Auflageebene definieren, die optional ein aufliegendes Halteelement tragen können. Das Halteelement kann horizontal, radial angeordnete hakenförmige Greifer aufweisen, in die Pflanzentriebe im Nahbereich über dem Wurzelzentrum eingeführt werden können.

Der Verbindungsadapter kann ein Halteelement mit mehreren, vorzugsweise vier hakenförmigen Greifern und mehreren, vorzugsweise vier Öffnungen sowie einer im Wesentlichen kreuzförmigen zentralen Aussparung umfassen. Die Aussparung ist dazu ausgeformt, den Verbindungsadapter und die Stange hindurch ragend aufzunehmen.

An den im Wesentlichen H-förmigen Teilen des Verbindungsadapters (Adaptermoduls) sind vorzugsweise auf ihren entgegengesetzten äußeren Längsseiten in gleicher Höhe stufenartige Verbreiterungen ausgeprägt, welche in einer gemeinsamen Höhe abschließen. Diese stufenartigen Verbreiterungen sind können optional ein Halteelement horizontal tragen, welches in seinem Zentrum eine im Wesentlichen kreuzförmige Aussparung aufweist. Diese Aussparung ist so dimensioniert, dass die von den Schenkeln und der von ihnen gemeinsam getragenen Stange durchstoßen und von den Stufen gehalten wird. Das Halteelement verfügt vorzugsweise über vier radial angeordnete hakenförmige Greifer deren Öffnungen sich in Stangennähe befinden und über die Pflanzentriebe eingeführt werden können, die aufgrund ihrer Eigenspannung in den inneren Erweiterungen des Halteelements einrasten können.

In einer weiteren Ausführungsform umfasst das Pflanzengerüst zum Stützen von Pflanzen einen Stangenaufsatz zum Stützen von zumindest einem Pflanzengefäß, der dazu eingerichtet ist, eine längliche vertikal ausrichtbare Stange und zumindest ein Pflanzengefäß aufzunehmen. Auch dieser Stangenaufsatz umfasst ein im Wesentlichen H-förmiges Aufsatzteil mit einem ersten Schlitz, einer ersten Aussparung und einem zwischen dem ersten Schlitz und der ersten Aussparung ausgebildeten ersten Verbindungssteg. Die erste Aussparung ist durch zwei erste im Wesentlichen parallele Schenkel seitlich begrenzt, wobei die ersten Schenkel durch den ersten Verbindungssteg miteinander verbunden sind und wobei sich der erste Schlitz und die erste Aussparung ausgehend von dem ersten Verbindungssteg in zueinander entgegengesetzte Richtungen erstrecken.

Außerdem umfasst der Stangenaufsatz zum Stützen des Pflanzengefäßes ein im Wesentlichen U-förmiges Aufsatzteil mit einer zweiten Aussparung und einem sich von dieser erstreckenden zweiten Schlitz, wobei die zweite Aussparung durch zwei zweite im Wesentlichen parallele Schenkel seitlich begrenzt ist, welche über einen zweiten Verbindungssteg miteinander verbunden sind.

Sowohl das H-förmige Aufsatzteil als auch das U-förmige Aufsatzteil des Stangenaufsatzes zum Stützen von Pflanzengefäßen sind vorzugsweise flach ausgestaltet. Das H-förmige Aufsatzteil ist dazu eingerichtet, auf dem ersten Ende der Stange aufgesteckt zu sein. Auf dem H-förmigen Aufsatzteil ist das U-förmige Aufsatzteil gegenüber dem H-förmigen Aufsatzteil überkreuzt aufgesteckt, so dass sich der erste Schlitz mit dem zweiten Schlitz in Eingriff befindet. Die beiden ersten Schenkel und die beiden zweiten Schenkel bilden eine erste Einfassung, damit die Stange in dieser ersten Einfassung von den ersten und zweiten Schenkeln an ihrem Umfang fest einzuspannen ist.

Das H-förmige Aufsatzteil und/oder das U-förmige Aufsatzteil des Stangenaufsatzes zum Stützen von Pflanzengefäßen weist jeweils mindestens zwei bogenförmige, sich seitlich von dem ersten und zweiten Verbindungssteg erstreckende Stützarme auf, welche im zusammengesteckten Zustand eine weitere Einfassung für das zu stützende Pflanzengefäß bilden. Ein Verlagern des Pflanzengefäßes in zumindest einer ersten horizontalen Richtung ist somit durch die Stützarme begrenzt.

In einer Variante kann sowohl das H-förmige Aufsatzteil als auch das U-förmige Aufsatzteil zwei Stützarme aufweisen, sodass ein Verlagern des zu stützenden Pflanzengefäßes in zwei zueinander senkrechten horizontalen Richtungen begrenzt ist.

In einer weiteren Ausführungsform umfasst das Pflanzengerüst außerdem zumindest zwei Stützbögen mit jeweils einer Basis und jeweils zwei sich von der Basis erstreckende Stützschenkel. Im Bereich der Basis der Stützbögen sowie in jedem der Stützarme des U-förmigen Aufsatzteils ist jeweils ein weiterer Schlitz ausgebildet. Auch in den Stützarmen des H-förmigen Aufsatzteils können Schlitze ausgebildet sein.

Darüber hinaus ist im U-förmigen Aufsatzteil und im H-förmigen Aufsatzteil im Bereich des ersten und zweiten Verbindungsstegs auf einer der jeweiligen Aussparung entgegengesetzten Seite ein Fortsatz ausgebildet. Der Schlitz jedes der Stützbögen befindet sich mit jeweils einem der in den Stützarmen ausgebildeten Schlitze in Eingriff. Dabei können die Stützbögen beispielsweise überkreuzt gegenüber dem jeweiligen Stützarm auf dem jeweiligen Stützarm aufgesteckt sein. Insgesamt bilden die Stützbögen, die Stützarme und die Fortsätze zusammen zwei Einfassungen. In jeder der beiden Einfassungen kann ein zu stützendes Pflanzengefäß aufgenommen sein, dessen Verlagern in zwei zueinander senkrechten Richtungen begrenzt ist.

Ein Pflanzengerüstsystem umfasst mindestens ein Pflanzengerüst sowie zwei oder mehrere gleiche flache Standfußbänder. Im Anwendungsfall sind die Standfußbänder auf ihrer Längskante aufgestellt und einander kreuzend angeordnet. Die Standfußbänder weisen an ihren Kreuzungen vertikale Schlitze auf. An diesen Schlitzen greifen die sich kreuzenden Standfußbänder ineinander ein. Optional kann an einer der Kreuzungen oder an mehreren Kreuzungen jeweils ein Pflanzengerüst aufgesteckt sein.

Der speziellen Situation bei Dachgärten, deren Erdauflage selten zum Fixieren von Stangen ausreicht, wird das System durch die Standfußbänder gerecht. Ihre Besonderheit darin besteht, dass die statisch wirksame Standfläche vor Substrataufbringung durch eine zusammenhängende, in ihrer Ausdehnung beliebig erweiterbare Gitterstruktur vergrößert wird. Dazu werden die einheitlich breiten, bandförmigen Standfußbänder mit einseitig in gleichen Abständen bis zu ihrer Mitte reichenden Steckschlitzen hochkant in rechten Winkeln einander überkreuzend zusammengesteckt und auf die Grundfläche gestellt. Jeder ihrer Kreuzungspunkte bietet die Option, eine Stange in vertikale Stellung zu bringen. Dies kann entweder durch Verbindungsadapter erreicht werden, welche identisch sind mit jenen zur Verlängerung der Normstange, oder durch allseitig bei jedem Kreuzungspunkt aufragende Schenkel, die analog zum solitären Fußteil die Stange jeweils zu viert in der Vertikalen fixieren.

Das oben beschriebene Pflanzengerüst oder das oben beschriebene Pflanzengerüstsystem kann vorteilhafterweise zum Lokalisieren und Markieren einer Pflanze oder mehrerer Pflanzen während der Vegetationsruhe verwendet werden. Vorteilhafterweise ist dabei ein Etikett auf dem Halteelement positioniert. Ein Etikett kann auf dem Halteelement positioniert sein. Das Etikett kann einen Klemmabschnitt umfassen, der dazu eingerichtet ist, die Stange teilweise zu umgreifen, und es kann an die Stange ansteckbar und von der Stange abziehbar sein. Auf dem Etikett kann ein darüber höhenbewegliches Rahmenteil aufliegen.

Im Freiland kann es während der Vegetationsruhe eingezogener Stauden sinnvoll sein, die Stange an ihrer Stelle zu belassen, obwohl sie dann nicht als Spalier benötigt wird, um die einmal herausgefundene günstigste Höhe zum Aufbringen der Spalieraufsätze für die nächste Saison zu erhalten.
Das Grundprinzip der einen einzelnen Stange zur primären Höhengewinnung kann dann dafür genutzt werden, dass diese Stange nicht lediglich als Markierung jener Stelle fungiert, an der sich eine eingezogene Staude oder eine Aussaat befindet, sondern unter Verwendung ggf. dazu adaptierter Halteelemente die Aufgabe eines Etikettenträgers übernimmt, der ihre Identifizierung auch dann erlaubt, wenn sie nicht sichtbar ist. Diese Verwendung des Spaliers als Etikettenträger während der Vegetationsruhe hat den weiteren Vorteil, die Stange durch das dazu erforderliche Aufsatzmodul sichtbarer zu machen, da sie als lediglich schmales, vertikales Element im Pflanzbeet leicht übersehen und bei Pflegearbeiten zur Gefahr werden könnte.

Das erfindungsgemäße Pflanzengerüst umfasst somit flache, d.h. im Wesentlichen zweidimensionale Formteile mit einer vorbestimmten Materialstärke. Diese Formteile sind die hier beschriebenen Halteelemente, H- und U-förmige Aufsatz-, Fuß- und Verbindungsteile, Standfußbänder, etc. Diese flachen Formteile werden vorzugsweise zusammengesteckt, können jedoch alternativ auch fest verbunden werden, z.B. verschraubt oder verschweißt, bzw. verklebt werden.

Die Formteile werden im Bereich ihrer Schlitze überkreuzt zusammengesteckt, die an dem zusammensteckbaren Formteilpaar reziprok, also zueinander komplementär ausgebildet sind. Zusammengesteckt bilden die Formteile Module, wie den Stangenaufsatz, den Verbindungsadapter oder Module zur reinen Höhengewinnung, Zierabschlüsse oder den Standfuß.

Es können optional sämtliche Module, die zusammen eine bedarfsorientierte Spalierlösung ermöglichen, aufeinander gesteckt sein, beispielsweise können Stangenaufsätze mit radial labyrinthartig strukturierten Halteelementen untereinander durch Aufstecken vertikal erweitert werden. Dabei werden die Module um 45 Grad versetzt aufeinandergesteckt, so dass die vier unteren Schenkel des oberen Moduls (z.B. des Stangenaufsatzes) passgenau in die vier Kreuzungswinkel des unteren zusammengesteckten Formteils (z.B. eines Moduls zur Höhengewinnung) herabreichen.

Vorteilhafterweise bietet eine solche Anordnung der zusammengesteckten Formteile aufgrund der im Effekt acht radial aneinandergrenzenden, sich gegenseitig lamellenartig verstärkenden Strukturen eine besonders hohe Stabilität des Pflanzengerüsts selbst bei wiederholter übereinandergesetzter Verwendung von Modulen mit großen radialen Halteelementen.

Bei Freilandverwendung ermöglicht das Grundprinzip der getrennten Handhabung von tragender Stange und den Modulen den ersten Schritt der bedarfsgerechten Höhenanpassung des Spaliers. Durch ein Sortiment vorgegebener Normlängen von Stangen bleibt dem Anwender der Zuschnitt erspart, da sich die erste grobe Höhenfestlegung aus der Einschlagstiefe einer Stange ins Erdreich ergibt, wobei ggf. die Stange tiefer als für die Statik erforderlich in die Erde getrieben wird. Darüber hinaus bietet das erfindungsgemäße Pflanzengerüst alle erforderlichen Möglichkeiten zur Nachjustierung der Höhe der Halteelemente. Diese erfolgt entweder durch die dazu konzipierte innere Konstruktion des Moduls selbst, oder durch Module zur vertikalen Höhengewinnung, oder durch die Verbindungsadapter, die durch zusätzliche obere Stangenausnehmungen ermöglichen, die Stange durch einen Stangenabschnitt zu verlängern.

Die Erfindung ist im Folgenden beispielhaft anhand der beiliegenden Figuren beschrieben. Es stellen dar:
Fig. 1 eine schematische Ansicht einer ersten Ausführungsform eines erfindungsgemäßen Pflanzengerüsts, wobei die Stange von den ersten und zweiten Schenkeln an ihrem Umfang fest eingespannt ist.
Fig. 2 eine Seitenansicht des H-förmigen und des U-förmigen Aufsatzteils aus Fig. 1.
Fig. 3 eine perspektivische Detailansicht eines oberen Abschnitts des Pflanzengerüsts aus Fig. 1.
Fig. 4 eine Querschnittsansicht des Pflanzengerüsts entlang der in Fig. 1 eingezeichneten Ebene A-A.
Fig. 5 eine Ansicht eines hakenförmigen Halteelements und eines ösenförmigen Halteelements.
Fig. 6 eine Ansicht eines Halteelements im offenen und verschlossenen Zustand.
Fig. 7 eine Ansicht verschiedener Halteelemente für solitäre Pflanzentriebe und Etiketten
Fig. 8 eine perspektivische Ansicht einer zweiten Ausführungsform eines erfindungsgemäßen Pflanzengerüsts.
Fig. 9 eine Aufsicht auf die Bestandteile des Pflanzengerüsts aus Fig. 8.
Fig. 10 eine Aufsicht auf die Komponenten einer dritten Ausführungsform eines erfindungsgemäßen Pflanzengerüsts.
Fig. 11 eine Seitenansicht auf die Komponenten einer vierten Ausführungsform eines erfindungsgemäßen Pflanzengerüsts.
Fig. 12 eine Seitenansicht auf die Komponenten einer fünften Ausführungsform eines erfindungsgemäßen Pflanzengerüsts.
Fig. 13 eine Seitenansicht bzw. Aufsicht auf die Komponenten einer sechsten Ausführungsform eines erfindungsgemäßen Pflanzengerüsts.
Fig. 14 eine Seitenansicht auf die Komponenten einer siebten Ausführungsform eines erfindungsgemäßen Pflanzengerüsts.
Fig. 15 eine Seitenansicht auf die Komponenten einer achten Ausführungsform eines erfindungsgemäßen Pflanzengerüsts.

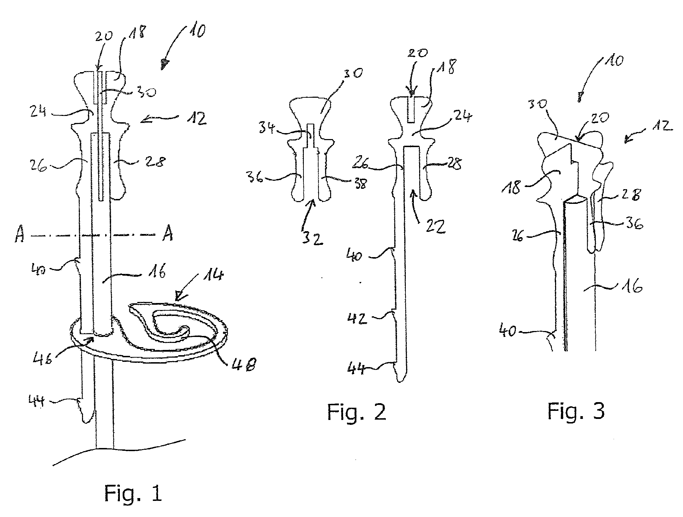

Fign. 1 bis 3 zeigen eine erste Ausführungsform eines erfindungsgemäßen Pflanzengerüsts 10 zum Stützen von Pflanzen. Das Pflanzengerüst 10 umfasst einen Stangenaufsatz 12, der ein flaches Halteelement 14 trägt und der eine längliche vertikal ausrichtbare Stange 16 aufnimmt. Der Stangenaufsatz 12 umfasst ein im Wesentlichen H-förmiges Aufsatzteil 18 mit einem ersten Schlitz 20, einer ersten Aussparung 22 und einem zwischen dem ersten Schlitz 20 und der ersten Aussparung 22 ausgebildeten ersten Verbindungssteg 24. Die erste Aussparung 22 ist durch zwei erste im Wesentlichen parallele Schenkel 26, 28 seitlich begrenzt. Die ersten Schenkel 26, 28 sind dabei anhand des ersten Verbindungsstegs 24 miteinander verbunden und der erste Schlitz 20 und die erste Aussparung 22 erstrecken sich ausgehend von dem ersten Verbindungssteg in zueinander entgegengesetzte Richtungen.

Der Stangenaufsatz 12 umfasst ferner ein im Wesentlichen U-förmiges Aufsatzteil 30 mit einer zweiten Aussparung 32 und einem von dieser ausgehenden zweiten Schlitz 34, wobei die zweite Aussparung 32 durch zwei zweite im Wesentlichen parallele Schenkel 36, 38 seitlich begrenzt ist.

Sowohl das H-förmige Aufsatzteil 18 als auch das U-förmige Aufsatzteil 30 sind flach. Wie in den Figuren 1 und 3 gezeigt, ist das H-förmige Aufsatzteil 18 auf einem ersten Ende der Stange 16 aufgesteckt und auf dem H-förmigen Aufsatzteil 18 ist das U-förmige Aufsatzteil 30 gegenüber dem H-förmigen Aufsatzteil 18 überkreuzt aufgesteckt. Der erste Schlitz 20 befindet sich dann mit dem zweiten Schlitz 34 in Eingriff, wobei die beiden ersten Schenkel 26, 28 und die beiden zweiten Schenkel 36, 38 eine erste Einfassung bilden. Die Stange 16 ist in dieser ersten Einfassung von den ersten und zweiten Schenkeln 26, 28, 36, 38 an ihrem Umfang fest eingespannt.

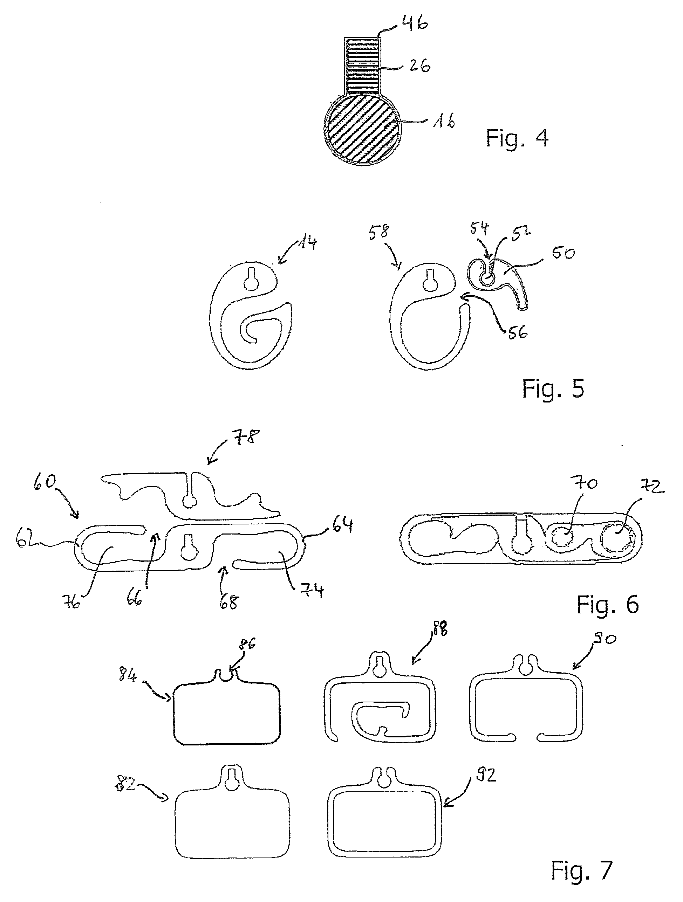

An dem Schenkel 26 des H-förmigen Aufsatzteils 18 sind voneinander beabstandete Stufen 40, 42, 44 ausgebildet. Wie in Fig. 4 gezeigt, weist das Halteelement 14 eine schlüssellochförmige Aussparung 46 auf, durch die die Stange 16 und der Schenkel 26 hindurchragen, wodurch das Halteelement 14 horizontal gehalten ist. In der Darstellung liegt das Halteelement 14 auf der mittleren Stufe 42 auf. Anhand eines am Halteelement 14 ausgebildeten hakenförmigen Abschnitts 48 sind Pflanzentriebe am Pflanzengerüst 10 fixierbar.

Die Fign. 5 und 6 zeigen das Halteelement 14, ein ösenförmiges Halteelement 58 sowie ein Verschlusselement 50, das für das Halteelement 58 vorgesehen ist und dazu eingerichtet ist, auf dem Halteelement 58 aufzuliegen. Das Verschlusselement 50 weist ebenfalls eine schlüssellochförmige Aussparung 52 auf, die sich jedoch von der Aussparung 46 des Halteelements 14 dadurch unterscheidet, dass sie zur Außenkontur auf einer Seite offen 54, und daher über die Stufen 40, 42, 44 hinweg entlang der Stange 16 und entlang des Schenkels 26 vertikal verschiebbar ist und von dem Schenkel 26 verdrehsicher gehalten ist, wobei das Verschlusselement 50 die Öffnung 56 in der Kontur des Halteelements 58 verschließt. Anhand des Verschlusselements 50 wird eine Öse gebildet, die den Pflanzentrieb auch in exponierter Lage mit Wind aus wechselnder Richtung verlustsicher fixiert.

Ein Halteelement 60, das anstatt dem Halteelement 14 einsetzbar ist, weist zwei Haken 62, 64 auf, durch deren Öffnungen 66, 68 Pflanzentriebe 70, 72 in Aussparungen 74, 76 des Halteelements 14 einführbar sind. Ein dazu passendes, höhenverschiebbares Verschlusselement 78 weist eine zu dem Halteelement 60 komplementäre Form auf, die es überdies erlaubt, die Triebe räumlich voneinander zu separieren.

Weitere für das Pflanzengerüst 10 vorgesehene Halteelemente sind in Fig. 7 gezeigt.

Das hakenförmige Halteelement 88 erfüllt die Doppelfunktion, einerseits als Halter für einen Pflanzentrieb dienen zu können; alternativ dazu, während der Vegetationsruhe, fungiert es als passgenaue Unterlage für Etikett 84, welches durch ein höhenverschiebbares, in geschlossenem Zustand aufliegendes Element 90 oder 92 fixiert sein kann. Element 90 und das ösenförmige Element 92 sind für das Fixieren des Etiketts (Element 84) einsetzbar, indem sie das Etikett an dessen Rand beschweren bzw. am Rand aufliegend einspannen. Element 84 ist aus dünnem, elastischem und beschriftbarem Etikettenmaterial gefertigt und weist mit seiner die tragende Stange geringfügig umfassenden Formation 86 eine Öffnung auf, die es ermöglicht, das Etikett an der Stange vorzufixieren und es bei Bedarf auszutauschen, ohne das ganze Modul auseinandernehmen zu müssen

Halteelement 82 ist alternativ zum Etikett 84 oder alternativ zur Etikettenunterlage des formal adaptierten Halteelements 88 vorgesehen. Bei alternativem Einsatz zu Etikett 84 ist es als eine beschriftbare Platte ausgestaltet. Diese Platte weist die gleiche schlüssellochförmige Aussparung auf wie das Halteelement 14. Element 82 kann auch als nicht beschriftbare, stabil tragende Unterlage für Etikett 84 alternativ zu Halteelement 88 in dessen Zweitverwendung eingesetzt werden.

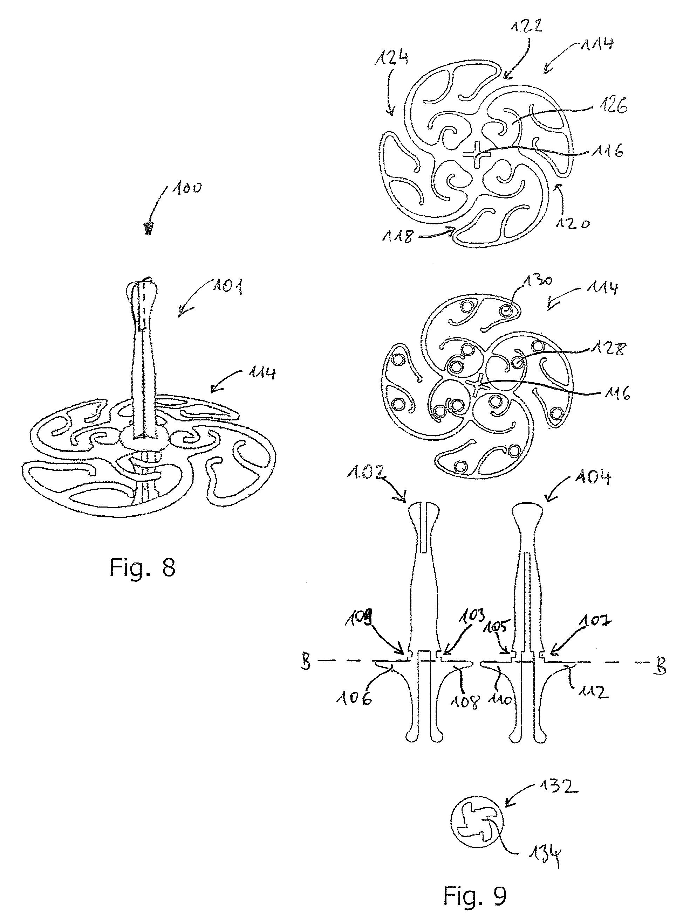

Die Fign. 8 und 9 zeigen eine zweite Ausführungsform eines erfindungsgemäßen Pflanzengerüsts 100, bei dem das H-förmige Aufsatzteil 102 und das U-förmige Aufsatzteil 104 jeweils zwei horizontale Ausleger 106, 108 und 110, 112 aufweisen. Die Ausleger definieren eine Auflageebene B und tragen zusammenwirkend ein Halteelement 114 in der Auflageebene B. Der Stangenaufsatz 101 durchsetzt das Halteelement 114 im Bereich einer zentralen kreuzförmigen Ausnehmung 116.

Das Halteelement 114 weist in seiner Außenkontur Öffnungen 118, 120, 122, 124 zu labyrinthartigen Aussparungen 126 des Halteelements 114 auf und die labyrinthartigen Aussparungen 126 des Halteelements sind dazu ausgebildet, Abschnitte von Pflanzentrieben 128, 130 unverlierbar zu halten. Ferner weist ein Ring 132 eine kreuzartige Aussparung 134 auf. Diese Aussparung 134 erlaubt es, den Ring 132 auf dem Halteelement 114, das auf den Auslegern 106, 108 und 110, 112 aufliegt, aufzuschrauben und einrasten zu lassen (vgl. Fig. 8). Der Ring 132 ist somit durch leichte Spannung in seiner endgültigen Position fixiert. Dadurch wird ermöglicht, dass das Halteelement 114 durch einseitig aufliegende Gewichte oder bei Sturm nicht aus der Waagerechten gekippt werden kann.

Das Halteelement ist selbst durch einen Ring mit kreuzförmiger Ausnehmung horizontal fixiert, deren Kontur in einer horizontalen Drehposition größenmäßig ausreicht, von den zusammengesteckten Aufsatzteilen und durchsetzt zu werden, so dass er zentral auf das Halteelement aufgelegt werden und mittels Drehung mit seinen vier nach innen ansteigend breiter werdenden Flügeln in passgenaue Aussparungen der Aufsatzteile bewegt werden kann, bis er durch leichte Spannung in seiner endgültigen Position einrastet.

Darüber hinaus weist das Pflanzengerüst 100 alle Merkmale des Pflanzengerüsts 10 auf.

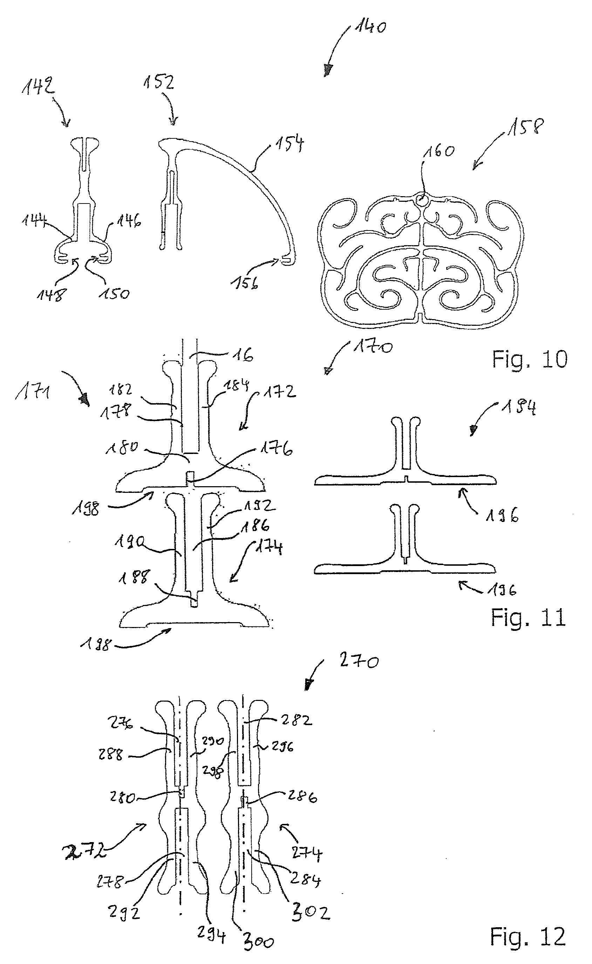

Eine dritte Ausführungsform eines erfindungsgemäßen Pflanzengerüsts 140 ist in Fig. 10 anhand von getrennten Einzelkomponenten gezeigt. Bei dem Pflanzengerüst 140 weist das H-förmige Aufsatzteil 142 einen ersten bogenförmig verlängerten Schenkel 144 und einen bezüglich einer Mittenachse des H-förmigen Aufsatzteils dazu symmetrischen zweiten bogenförmig verlängerten Schenkel 146 auf und das U-förmige Aufsatzteil 152 weist eine bogenförmige Verlängerung 154 auf. Alle verlängerten Schenkel 144, 146 sowie die bogenförmige Verlängerung 154 weisen an ihren distalen Enden jeweils eine gabelartige Greifvorrichtung 148, 150, 156 mit einer zu der Stange hin gerichteten Öffnung auf. Anhand dieser Greifvorrichtungen 148, 150, 156 ist das Halteelement 158 getragen. Das Halteelement 158 weist ein Loch 160 auf, durch das die Stange 16 hindurch ragend aufgenommen ist, so dass das Halteelement 158 stabilisiert ist.

Darüber hinaus weist das Pflanzengerüst 100 alle Merkmale des Pflanzengerüsts 10 auf.

Eine vierte Ausführungsform eines erfindungsgemäßen Pflanzengerüsts 170 ist in Fig. 11 anhand von getrennten Einzelkomponenten gezeigt. Das Pflanzengerüst 170 unterscheidet sich von dem Pflanzengerüst 10, indem es einen Standfuß 171 zum Stützen der Stange 16 in einer vertikalen Ausrichtung umfasst. Diese Variante findet unterirdische Anwendung z. B. im Bereich von Kübelpflanzen, wo der Erdwiderstand allein für eine dauerhafte Vertikalstellung der Stange zu gering ist, oder sie wird auf ebenen Boden für Pflanzenspaliere zum erhöhten Tragen von Ampelpflanzen eingesetzt. Der Standfuß 171 umfasst ein im Wesentlichen H-förmiges Fußteil 172 mit einem dritten Schlitz 176, einer dritten Aussparung 178 und einem zwischen dem dritten Schlitz 176 und der dritten Aussparung 178 ausgebildeten zweiten Verbindungssteg 180, wobei die dritte Aussparung 178 durch zwei dritte im Wesentlichen parallele Schenkel 182, 184 seitlich begrenzt ist, wobei die dritten Schenkel 182, 184 anhand des zweiten Verbindungsstegs 180 miteinander verbunden sind und wobei sich der dritte Schlitz 176 und die dritte Aussparung 178 ausgehend von dem zweiten Verbindungssteg 180 in zueinander entgegengesetzte Richtungen erstrecken.

Der Standfuß 171 umfasst ferner ein im Wesentlichen U-förmiges Fußteil 174 mit einer vierten Aussparung 186 und einem von dieser ausgehenden vierten Schlitz 188, wobei die vierte Aussparung 186 durch zwei vierte im Wesentlichen parallele Schenkel 190, 192 seitlich begrenzt ist. Das H-förmige Fußteil 172 und das U-förmige Fußteil 174 sind flach und das H-förmige Fußteil 172 ist auf einem zweiten Ende der Stange 16 aufgesteckt. Auf dem H-förmigen Fußteil 172 ist das U-förmige Fußteil 174 gegenüber dem H-förmigen Fußteil überkreuzt aufgesteckt, so dass sich der dritte Schlitz 176 mit dem vierten Schlitz 188 in Eingriff befindet. Die beiden dritten Schenkel 182, 184 und die beiden vierten Schenkel 190, 192 bilden dabei eine zweite Einfassung und die Stange ist in dieser zweiten Einfassung von den dritten und vierten Schenkeln 182, 184 und 190, 192 an ihrem Umfang eingespannt.

Ferner zeigt Fig. 11 einen Standfuß 194, der sich von dem Standfuß 171 dadurch unterscheidet, dass die Basis 196 des Standfußes 194 länger und breiter ist als die Basis 198 des Standfußes 171. Die leichte zentrale untere Ausnehmung überspannt produktionsbedingt häufig an dieser Stelle befindliche Erhebungen von Pflanzgefäßen aus Kunststoff.

Darüber hinaus weist das Pflanzengerüst 170 alle Merkmale des Pflanzengerüsts 10 auf.

Eine fünfte Ausführungsform eines erfindungsgemäßen Pflanzengerüsts 270 ist in Fig. 12 anhand von getrennten Einzelkomponenten gezeigt. Das Pflanzengerüst 270 unterscheidet sich von dem Pflanzengerüst 10, indem es zusätzlich einen Verbindungsadapter umfasst, der aus einem ersten und einem zweiten im Wesentlichen H-förmigen Verbindungsteil 272, 274 gebildet ist. Das erste H-förmige Verbindungsteil 272 weist eine fünfte und eine sechste Aussparung 276, 278 und einen fünften Schlitz 280 auf und das zweite H-förmige Verbindungsteil 274 weist eine siebte und eine achte Aussparung 282, 284 und einen sechsten Schlitz 286 auf. Dabei ist die fünfte Aussparung 276 durch zwei im Wesentlichen parallele fünfte Schenkel 288, 290, die sechste Aussparung durch zwei im Wesentlichen parallele sechste Schenkel 292, 294, die siebte Aussparung durch zwei im Wesentlichen parallele siebte Schenkel 296, 298 und die achte Aussparung durch zwei im Wesentlichen parallele achte Schenkel 300, 302 seitlich begrenzt.

Das erste und das zweite H-förmige Verbindungsteil 272, 274 sind bezüglich einer gemeinsamen Mittensymmetrieachse als symmetrisch dargestellt und das erste und das zweite H-förmige Verbindungsteil 272, 274 sind dazu vorgesehen überkreuzt zusammengesteckt zu sein, wobei auf dem ersten H-förmigen Verbindungsteil 272 das zweite H-förmige Verbindungsteil 274 gegenüber dem ersten H-förmigen Verbindungsteil überkreuzt aufgesteckt ist, so dass sich der fünfte Schlitz 280 mit dem sechsten Schlitz 286 in Eingriff befindet.

Die beiden sechsten Schenkel 292, 294 und die beiden achten Schenkel 302, 304 bilden eine dritte Einfassung und die Stange (nicht gezeigt) ist in dieser dritten Einfassung fest einzuspannen. Ferner bilden die beiden fünften Schenkel 288, 290 und die beiden siebten Schenkel 296, 298 eine zusätzliche Einfassung, damit eine zusätzliche Stange (nicht gezeigt) von den fünften und siebten Schenkeln an ihrem Umfang einzuspannen ist.

Darüber hinaus weist das Pflanzengerüst 270 alle Merkmale des Pflanzengerüsts 10 auf.

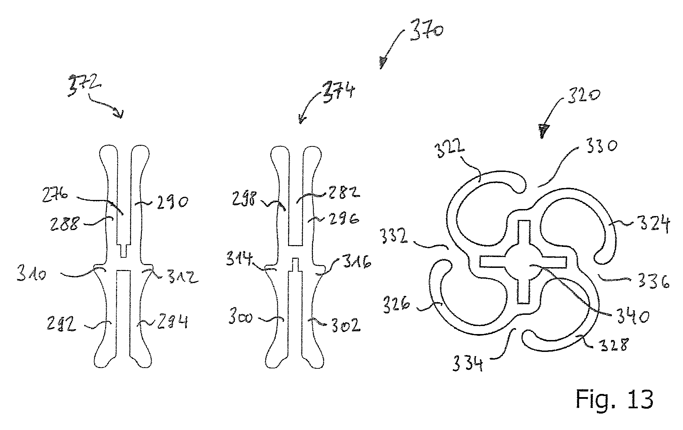

Eine sechste Ausführungsform eines erfindungsgemäßen Pflanzengerüsts 370 ist in Fig. 13 anhand von getrennten Einzelkomponenten gezeigt. Das Pflanzengerüst 370 unterscheidet sich von dem Pflanzengerüst 270, indem der Verbindungsadapter des Pflanzengerüsts 370 stufenartige Verbreiterungen 310, 312, 314, 316 aufweist.

Der Verbindungsadapter des Pflanzengerüsts 370 umfasst ein Halteelement 320 mit vier Haken 322, 324, 326, 328 und vier Öffnungen 330, 332, 334, 336 sowie einer im Wesentlichen kreuzförmigen zentralen Aussparung 340. Die Aussparung ist dazu ausgeformt, den Verbindungsadapter und die Stange hindurch ragend aufzunehmen.

An den im Wesentlichen H-förmigen Teilen des Verbindungsadapters (Adaptermoduls) des Pflanzengerüsts 270 sind vorzugsweise auf ihren entgegengesetzten äußeren Längsseiten in gleicher Höhe stufenartige Verbreiterungen 310, 312, 314, 316 ausgeprägt, welche in einer gemeinsamen Höhe abschließen und somit geeignet sind, optional ein Halteelement 320 horizontal zu tragen, welches in seinem Zentrum eine im Wesentlichen kreuzförmige Aussparung 340 aufweist. Diese Aussparung 340 ist so dimensioniert, dass die von den Schenkeln 288, 290, 296 und 298 und der von ihnen gemeinsam getragenen Stange durchstoßen und von den Stufen 310, 312, 314, 316 gehalten wird. Das Halteelement 320 verfügt vorzugsweise über vier radial angeordnete hakenförmige Greifer 322, 324, 326, 328, deren Öffnungen 330, 332, 336, 338 sich in Stangennähe befinden und über die Pflanzentriebe eingeführt werden können, die aufgrund ihrer Eigenspannung in den inneren Erweiterungen des Halteelements einrasten können.

Darüber hinaus weist das Pflanzengerüst 370 alle Merkmale des Pflanzengerüsts 270 auf.

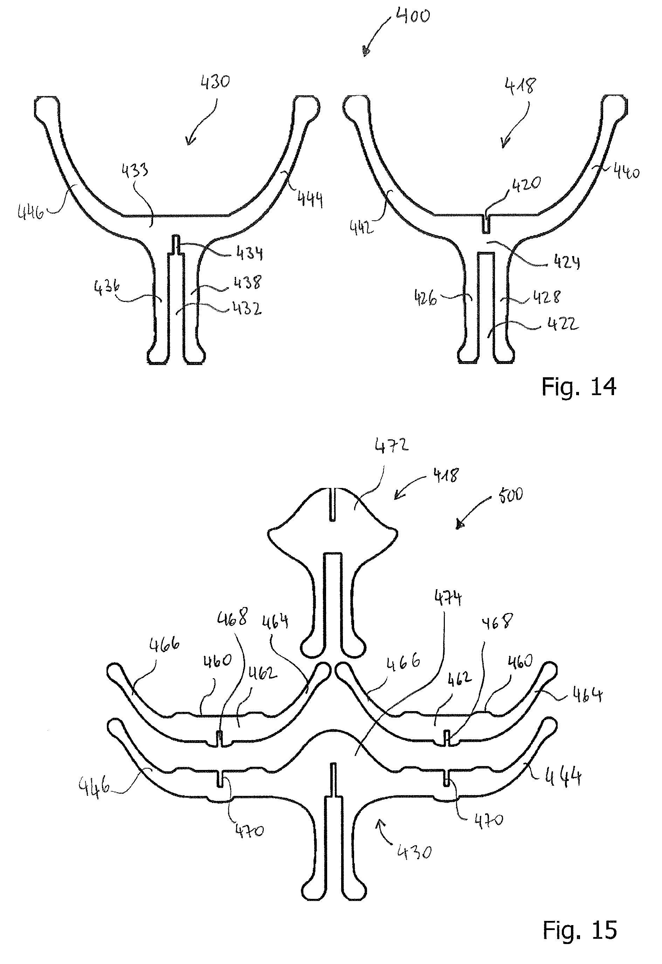

Eine siebte Ausführungsform eines erfindungsgemäßen Pflanzengerüsts 400 ist in Fig. 14 anhand von getrennten Einzelkomponenten gezeigt. Dieses Pflanzengerüst 400 umfasst einen Stangenaufsatz zum Stützen von zumindest einem Pflanzengefäß, der dazu eingerichtet ist, eine längliche vertikal ausrichtbare Stange (nicht gezeigt) und zumindest ein Pflanzengefäß (nicht gezeigt) aufzunehmen.

Die Konstruktion wird dem Wuchsverhalten von Pflanzen mit hängenden Trieben gerecht, indem sie eine in beliebigem Abstand vom Boden erhöhte sturmsichere Platzierung des Pflanzgefäßes im Freiland ermöglicht. Bei Zierpflanzen kann es aus ästhetischen Gründen, bei Nutzpflanzen zusätzlich oder überwiegend zur Steigerung des Fruchtertrages sinnvoll sein, die herabhängenden Triebe radial um die das Gefäß haltende Stange zu ordnen. Dies erfolgt durch Zwischenschaltung jenes Moduls, das in Figur 8 beschrieben ist.

Der Stangenaufsatz umfasst ein im Wesentlichen H-förmiges Aufsatzteil 418 mit einem ersten Schlitz 420, einer ersten Aussparung 422 und einem zwischen dem ersten Schlitz 420 und der ersten Aussparung 422 ausgebildeten ersten Verbindungssteg 424. Die erste Aussparung 422 ist durch zwei erste im Wesentlichen parallele Schenkel 426, 428 seitlich begrenzt, die durch den ersten Verbindungssteg 424 miteinander verbunden sind. Der erste Schlitz 420 und die erste Aussparung 422 erstrecken sich ausgehend von dem ersten Verbindungssteg 424 in zueinander entgegengesetzte Richtungen.

Der Stangenaufsatz umfasst ferner ein im Wesentlichen U-förmiges Aufsatzteil 430 mit einer zweiten Aussparung 432 und einem sich von dieser erstreckenden zweiten Schlitz 434, wobei die zweite Aussparung 432 durch zwei zweite im Wesentlichen parallele Schenkel 436, 438 seitlich begrenzt ist, welche über einen zweiten Verbindungssteg 433 miteinander verbunden sind. Das H-förmige Aufsatzteil 418 und das U-förmige Aufsatzteil 430 sind flach. Das H-förmige Aufsatzteil 418 ist dazu eingerichtet ist, auf dem ersten Ende der Stange 16 aufgesteckt zu sein und auf dem H-förmigen Aufsatzteil 418 ist das U-förmige Aufsatzteil 430 gegenüber dem H-förmigen Aufsatzteil 418 überkreuzt aufgesteckt, sodass sich der erste Schlitz 420 mit dem zweiten Schlitz 434 in Eingriff befindet, wobei die beiden ersten Schenkel 426, 428 und die beiden zweiten Schenkel 436, 438 eine erste Einfassung bilden, damit die Stange in dieser ersten Einfassung von den ersten und zweiten Schenkeln an ihrem Umfang fest einzuspannen ist. Das H-förmige Aufsatzteil und das U-förmige Aufsatzteil weisen jeweils zwei bogenförmige, sich seitlich von dem ersten und zweiten Verbindungssteg 424, 433 erstreckende Stützarme 440, 442, 444, 446 auf, welche im zusammengesteckten Zustand eine weitere Einfassung bilden, in der das zu stützende Pflanzengefäß aufgenommen ist. Ein Verlagern des Pflanzengefäßes in zwei zueinander senkrechten horizontalen Richtungen ist durch die Stützarme 440, 442, 444, 446 begrenzt. Anstelle eines Pflanzengefäßes kann auch eine batterie- oder solarzellengespeiste transluzente Lampe zur abendlichen Beleuchtung des Gartens in die Einfassung eingebracht sein.

Eine achte Ausführungsform eines erfindungsgemäßen Pflanzengerüsts 500 ist in Fig. 15 anhand von getrennten Einzelkomponenten gezeigt. Dieses Pflanzengerüst 500 unterscheidet sich von dem Pflanzengerüst 400 dadurch, dass das H-förmige Aufsatzteil 418 keine Stützarme, sondern nur das U-förmige Aufsatzteil 430 zwei Stützarme 444, 446 aufweist.

Das Pflanzengerüst 500 umfasst außerdem zwei Stützbögen 460 mit einer Basis 462 und jeweils zwei sich von der Basis 462 erstreckenden Stützschenkeln 464, 466, wobei im Bereich der Basis 462 der Stützbögen 460 jeweils ein weiterer Schlitz 468 ausgebildet ist. Darüber hinaus ist auch in jedem der Stützarme 444, 446 des U-förmigen Aufsatzteils ein weiterer Schlitz 470 ausgebildet. Im U-förmigen Aufsatzteil 430 und im H-förmigen Aufsatzteil 418 ist im Bereich des ersten und zweiten Verbindungsstegs auf einer der jeweiligen Aussparung entgegengesetzten Seite ein Fortsatz 472, 474 ausgebildet, wobei sich der Schlitz 468 jedes der Stützbögen 460 mit jeweils einem der in den Stützarmen ausgebildeten Schlitze 470 in Eingriff befindet und dadurch die Stützbögen 460, die Stützarme 444, 446 und die Fortsätze 472, 474 zusammen zwei Einfassungen bilden.

Zumindest ein Pflanzengefäß kann in jeder der beiden Einfassungen aufgenommen werden. Ein Verlagern eines darin aufgenommenen, zu stützenden Pflanzengefäßes ist folglich in zwei zueinander senkrechten Richtungen, insbesondere durch die Stützbögen 460, die Stützarme 444, 446 und die Fortsätze 472, 474, begrenzt.

Alternativ können die Stangenaufsätze der Pflanzengerüste 400 und 500 als Standfüße analog zu den Standfüßen 171 und 194 verwendet werden. Die Stützarme 444, 446 und optional die Stützbögen 460 und/oder die Fortsätze 472, 474, insbesondere deren bezüglich der Einfassung der Stange entgegengesetzten Enden, stehen dabei auf einer Auflagefläche und halten die Stange in einer vertikalen Ausrichtung.

Das erfindungsgemäße Pflanzengerüst kann ferner eines oder mehrere der folgenden Merkmale aufweisen:
Das Pflanzengerüst im Stecksystem kann insbesondere geeignet sein zum prophylaktischen oder rekonstruierenden Fixieren stehender und hängender instabiler Triebe sämtlicher Freiland- und Kübelpflanzen in ihrem jeweiligen individuellen natürlichen Habitus. Das Pflanzengerüst kann eine tragende Funktion ausüben, etwa zum Tragen von Ampelpflanzen mit ihren Pflanzgefäßen oder zum Tragen von anderen aufliegenden zur Pflanze gehörenden Objekten, wie beispielsweise deren Früchte, oder die Pflanze unterstützende Objekte, wie Verdunstungsgefäße, oder zusätzliche Pflanzgefäße zur Vermehrung durch Absenker. Das Pflanzengerüst kann im Freiland während der Vegetationsruhephase vorübergehend als Positionsmarkierer und Etikettenträger zur Identifizierung nicht stützbedürftiger, eingezogener Stauden oder noch nicht entwickelter Aussaaten als Information für eine sinnvolle Abstimmung gärtnerischer Maßnahmen im Umfeld eingesetzt werden.

Das Pflanzengerüst kann neben einer einzigen, unabhängig von den danach aufzusetzenden Modulen in der Erde oder durch Hilfsmittel fixierten Stange 1 zur primären Höhengewinnung ausschließlich aus Teilen bestehen, für deren Endfertigung lediglich ihre zweidimensionalen Konturen und die einheitliche Materialstärke bekannt sein müssen, und von denen vertikal jeweils ein unteres und ein oberes im rechten Winkel durch reziproke Schlitze überkreuzt als Module zusammengesteckt sein können. Die Module können der Stangenaufsatz, der Verbindungsadapter, der Standfuß, Module zur Höhengewinnung oder Schutz- und Zierabschlüsse sein. Die Module können mit einer passgenauen Ausnehmung die Stange von vier Seiten in senkrechter Position halten oder/und nach diesem Prinzip in funktionsangepasster Form auf ihr aufsitzen. An den Modulen können weitere Teile in horizontaler Position fixiert sein, die in ihrer Außenkontur Öffnungen zum Einführen von Pflanzentrieben aufweisen können, die zu inneren Aussparungen führen, die eine vertikale Endposition der Triebe bestimmen und auf deren vertikales Teilepaar bedarfsorientiert zusätzliche Module dergestalt gesteckt werden können, dass sie mit dem Abschluss ihrer unteren Ausnehmung auf dem höchsten Kreuzungspunkt der vertikalen Formteile des unteren Moduls aufsitzen und ihre vier Schenkel anliegend in die vier Winkel des unteren Teils herabreichen.

Das Pflanzengerüst kann ferner eine einheitlich schmale Verlängerung des unteren vertikalen Steckteils des Moduls aufweisen, die die dieses Modul tragende Stange nach unten berührend begleitet. Das untere vertikale Steckteil kann das H-förmige Aufsatzteil oder das H-förmige Verbindungsteil sein. Die Verlängerung kann in vorbestimmten Abständen mit alternativ als Arretierungen verfügbaren Verbreiterungen versehen sein, welche Halteelemente, die als nach innen zurückführende hakenförmige Greifer zur Aufnahme von Pflanzentrieben geformt sind, dadurch an der Stange in gewünschter Höhe horizontal fixieren, dass diese eine passgenau geformte Bohrung aufweisen, durch die die Verlängerung mit den Widerständen bewegt werden kann, und die durch paralleles Einführen der Stange in der Art ausgefüllt wird, dass die jeweilige Arretierung unter dem Halteelement wirksam wird, weil im rechtwinklig abschließenden Bereich der Bohrung nur einer der schmalen Abschnitte der vertikalen Verlängerung neben der Stange Platz hat, die ihrerseits den ihrem Querschnitt angepassten Bereich der Bohrung voll ausfüllt.

An dem Pflanzengerüst kann auf einem horizontalen Teil, beispielsweise einem Halteelement, ein zweites horizontales Teil, beispielsweise ein Verschlusselement, aufliegen, das über die Arretierungsvorsprünge der Verlängerung des unteren vertikalen Formteils vertikal frei beweglich, aber in der Horizontalen durch partielle Hinterschneidung an die Stange gebunden sein kann. Dabei können die horizontalen Teile jeweils dazu eingerichtet sein, aufgrund der Führung durch die Verlängerung des unteren vertikalen Formteils nicht eigenständig um die Stange zu rotieren. Das zweite horizontale Teil kann ferner so geformt sein, dass es seitliche Öffnungen zu inneren Ausnehmungen des unteren Teils allein durch sein Aufliegen verschließt. Das zweite horizontale Teil kann selbst an Stellen seiner Außenkontur offen sein und ein seitliches Einführen von Pflanzentrieben ermöglichen, so dass beide Teile in gemeinsamer Wirkung ring- bzw. ösenartige horizontale Komplettfixierungen von Trieben ermöglichen. Darüber hinaus kann das aufliegende Teil mittels Einschnürungen der gemeinsamen zentralen Öffnungen eine weitere innere Fixierung entsprechend der Triebstärke vorsehen.

Während der Vegetationspause einer Staude oder während früher Entwicklungsphasen einer Aussaat kann das Pflanzengerüst alternativ nicht zum Stützen, sondern, da die Pflanze entweder eingezogen oder noch nicht entwickelt und dadurch unsichtbar ist, zu ihrer Lokalisierung dienen. Dabei kann das Pflanzengerüst, bis es seine pflanzenstützende Funktion wieder aufnimmt, als Etiketten- und damit als Informationsträger zur zugehörigen Pflanze fungieren, damit gärtnerische Maßnahmen im Umfeld sinnvoll abgestimmt werden können. In diesem Fall kann dem Pflanzengerüst ein Etikett aus elastischem Material, beispielsweise aus PVC, hinzugefügt und dadurch in Position gehalten werden, dass es auf dem ggf. formal adaptierten, aber in seiner Funktionsweise unbeeinträchtigten unteren Halteelement, dem Greifer, aufliegt oder darauf geklebt ist.

Optional kann das auf dem unteren Halteelement aufliegende Etikett von einem dazu passenden rahmenartig geformten aufliegenden Halteelement, das über eine Öffnung zur Aufnahme eines Pflanzentriebes verfügen kann, an seinen nicht beschrifteten Rändern beschwert sein und zusätzlich durch eine passgenaue Ausnehmung im Randbereich, welche die tragende Stange partiell hinterfasst, dergestalt fixiert sein, dass witterungsverursachte Einwirkungen es bei aufliegendem Halteelement nicht aus seiner Position verbringen. Ferner kann vorgesehen sein, dass das untere Halteelement als Träger für ein elastisches Etikett dient, das bei angehobenem oberen Halteelement mit geringem Krafteinsatz horizontal aus seiner Verankerung an der Stange zu entfernt werden kann und es durch den umgekehrten Vorgang mittels horizontalem Aufstecken auf die Stange, durch ein anderes ersetzt werden kann. Die Teile des Spaliers können bei Bedarf wieder zum Stützen von Pflanzentrieben verwendet werden.

Das untere Halteelement, der Greifer, kann vorübergehend ersetzt sein durch eine nach gleichem Prinzip montierte, durchgehende Fläche, die selbst beschriftbar ist, oder als Unterlage für ein Etikett aus elastischem Material, beispielsweise aus PVC, dienen, und zur Sicherung mit einem kartuschenartig umrahmenden, aufliegenden Halteelement mit geschlossener Randkontur beschwert werden.

Die vertikalen Teile können nach allen Seiten durch nach oben waagerecht in einer horizontalen Ebene abschließende Ausleger verlängert sein und zusammengesteckt gemeinsam ein horizontales Element tragen, das einerseits eine zentrale kreuzförmige Ausnehmung in einer Dimension aufweist, welche nötig und ausreichend ist, von jenem Bereich der vertikalen Teile durchstoßen zu werden, der sich über die Ausleger erhebt. Das horizontale Element kann an seiner Außenkontur Eingänge in verzweigte Systeme durchgehender, spontan die Richtung wechselnder Aussparungen aufweisen, die es ermöglichen, Pflanzentriebe an verschiedensten Stellen dieser Binnenformation einrasten zu lassen.

Beide durch die Ausnehmung für die Stange definierten Schenkel des unteren vertikalen Formteils können in zunehmender Distanz von der Stange wegführend nach unten verlängert sein und in ihrem verbreiterten Endbereich spontane Verengungen aufweisen. Diese Verengungen können sich mit einer ebensolchen Verengung auf einer Höhe befinden, welche den Endbereich eines am oberen vertikalen Formteil entspringenden Bügels funktionalisiert, der ein in den drei Verengungen lagerndes Halteelement überspannt. Dieses Halteelement ist gegen horizontale Bewegung zusätzlich dadurch abgesichert, dass einerseits die tragende Stange durch eine entsprechende passgenaue Bohrung geführt ist, andererseits im Konfrontationsbereich aus Vertikale und Horizontale spontane Verengungen aufweist, welche passgenau dimensioniert sind, die tragenden vertikalen Formteile von drei Seiten anliegend gabelartig zu umfassen, und dessen Binnenkontur ein verzweigtes System zusammenhängender Aussparungen aufweist. Dieses System wiederum weist Ausgänge in seiner Außenkontur zur Aufnahme von stehenden und hängenden Pflanzentrieben auf und ist in seiner Eigenschaft als waagerecht im Raum stehende Fläche dazu geeignet, Gefäße von Pflanzen zu tragen, deren herabhängende Triebe in die tragende Fläche locker eingefädelt und somit in ihrer vertikalen Erscheinung fixiert werden können.

Der die Vertikalstellung des Spaliers im Freiland ermöglichende Erdwiderstand kann durch zwei rechtwinklig durch reziproke Schlitze überkreuzte vertikale Formteile ersetzt werden, welche senkrecht nach oben über ihrer Kreuzungsachse eine passgenaue Ausnehmung für die Stange aufweisen und durch eine gemeinsame ebene waagerechte Basis gekennzeichnet sind. Diese Basis ist dazu vorgesehen, unterirdisch im Wurzelbereich auf einer ebenen Fläche, z. B. auf dem Boden eines Pflanzgefäßes, zu stehen. Die häufig vorkommenden zentralen Erhebungen im Boden von Kunststoffgefäßen können durch zentrale Ausnehmungen unter dem Kreuzungspunkt des so konstruierten Standfußes überspannt sein. Eine alternative Verwendung dieses Standfußes sieht vor, diesen bei Freilandverwendung am freien Stangenende, auf festem Boden stehend einen zweiten am oberen Stangenende umgekehrt aufgesetzten Standfuß zum Einsatz zu bringen, um ein Pflanzgefäß mit einer Ampelpflanze in einer Höhe über dem Boden tragen zu können, die ihren herabhängenden Trieben angepasst ist bzw. der gewünschten Optik entspricht.

Das Pflanzengerüst kann ermöglichen, auf größerer Fläche mit geringer Erdauflage, ohne dass in irgendeiner Form eine Montage an der Bodenfläche erfolgt, instabile Triebe mehrerer im Abstand voneinander wachsender Pflanzen mit individuellen Spalieren vertikal so zu stützen, wie es bei vergleichbaren Freiflächen mit meterdicker Erdschicht möglich wäre. Dabei befindet sich auf der unterirdischen Ebene ein durch Kreuzungen im rechten Winkel unbegrenzt erweiterbares Gittersystem. Die Einzelkomponenten des Gittersystems bestehen aus auf eine Längskante gestellten stabilen Bandformationen einheitlicher Stärke und Höhe, aber unterschiedlicher Länge. Die Bandformationen weisen auf einer Längsseite in gleichen Anständen vertikale Schlitze mit einer geringfügig über der Materialstärke liegenden Breite auf.

Die Schlitze reichen vorzugsweise bis zur Bandmitte, wo sie im rechten Winkel enden und somit untereinander vertikal im rechten Winkel dergestalt zusammengesteckt kombiniert werden können, dass die in Bandmitte befindlichen Basen der nach oben gerichteten Schlitze des jeweiligen unteren Bandes von den jeweiligen Basen der Schlitze des aufliegend verwendeten Bandes berührt werden. Der Kreuzungspunkt an den Stellen mit Bedarf für ein Pflanzenspalier kann durch ein Modul aus zwei vertikal durch einen reziproken Schlitz zusammengesteckten Teilen überfasst sein. Dabei ist es vorgesehen, dass die Teile mit der gemeinsamen Basis einer unteren Ausnehmung auf dem Kreuzungspunkt aufliegen, welche so bemessen ist, dass sie gerade ausreicht, die sie begrenzenden Schenkel diagonal in die Winkel der Kreuzung nach unten ragen zu lassen und denen auf der nach oben gerichteten Seite Schenkelformationen entsprechen, die eine gemeinsame Aussparung aufweisen, welche passgenau für die vertikal aufzunehmende Stange dimensioniert ist. Diese Module können dabei auch die Funktion erfüllen, eine Stange passender Stärke um ein entsprechendes Stangenteil zu verlängern.

Die vertikale Stange zur primären Höhengewinnung kann durch ein Adaptermodul um einen im Durchmesser nicht zwingend gleichstarken Stangenabschnitt verlängert werden. Das Adaptermodul kann der Verbindungsadapter sein. Das Adaptermodul kann aus zwei vertikalen Teilen bestehen, die zusätzlich zu der unteren Ausnehmung über eine funktionsgleiche obere Ausnehmung verfügen. Die obere Ausnehmung kann an derselben vertikalen Linie achsensymmetrisch ausgerichtet sein, an der die reziproken Steckschlitze die unteren Ausnehmungen achsensymmetrisch orientiert sind. Die obere Ausnehmung kann so bemessen sein, dass anstatt einer Stange ein diagonal eingeführtes Vertikalmodul statisch stabil diverse Funktionen ausüben kann, auch wenn es selbst nicht mit einer unteren Ausnehmung ausgestattet ist.

## Patentansprüche

1. Pflanzengerüst (10, 100, 140, 170, 270) zum Stützen von Pflanzen, umfassend einen Stangenaufsatz (12) zum Tragen von flachen Halteelementen (14), der dazu eingerichtet ist, eine längliche vertikal ausrichtbare Stange (16) aufzunehmen, der Stangenaufsatz (12) umfassend
- ein im Wesentlichen H-förmiges Aufsatzteil (18) mit einem ersten Schlitz (20), einer ersten Aussparung (22) und einem zwischen dem ersten Schlitz und der ersten Aussparung ausgebildeten ersten Verbindungssteg (24), wobei die erste Aussparung (22) durch zwei erste im Wesentlichen parallele Schenkel (26, 28) seitlich begrenzt ist, wobei die ersten Schenkel (26, 28) anhand des ersten Verbindungsstegs (24) miteinander verbunden sind und wobei sich der erste Schlitz (20) und die erste Aussparung (22) ausgehend von dem ersten Verbindungssteg (24) in zueinander entgegengesetzte Richtungen erstrecken, und
- ein im Wesentlichen U-förmiges Aufsatzteil (30) mit einer zweiten Aussparung (32) und einem von dieser ausgehenden zweiten Schlitz (34), wobei die zweite Aussparung (32) durch zwei zweite im Wesentlichen parallele Schenkel (36, 38) seitlich begrenzt ist,
wobei das H-förmige Aufsatzteil (18) und das U-förmige Aufsatzteil (30) flach sind und
wobei das H-förmige Aufsatzteil (18) dazu eingerichtet ist, auf einem ersten Ende der Stange (16) aufgesteckt zu sein und auf dem H-förmigen Aufsatzteil (18) das U-förmige Aufsatzteil (30) gegenüber dem H-förmigen Aufsatzteil überkreuzt aufgesteckt ist, so dass sich der erste Schlitz (20) mit dem zweiten Schlitz (34) in Eingriff befindet, wobei die beiden ersten Schenkel (26, 28) und die beiden zweiten Schenkel (36, 38) eine erste Einfassung bilden, damit die Stange (16) in dieser ersten Einfassung von den ersten und zweiten Schenkeln an ihrem Umfang fest einzuspannen ist.

2. Pflanzengerüst (10) nach Anspruch 1, wobei an einem der Schenkel des U-förmigen Aufsatzteils (36, 38) oder des H-förmigen Aufsatzteils (26, 28) voneinander beabstandete Stufen (40, 42, 44) ausgebildet sind, auf denen die Halteelemente (14) aufliegen, und die Halteelemente (14) jeweils eine Aussparung (46) aufweisen, die dazu eingerichtet ist, die Stange (16) und den Schenkel hindurch ragend aufzunehmen, wodurch die Halteelemente (14) horizontal gehalten sind, und wobei die Halteelemente (14) einen oder mehrere hakenförmige Abschnitte (48) zum Fixieren von Abschnitten von Pflanzentrieben aufweisen.

3. Pflanzengerüst (10) nach einem der vorhergehenden Ansprüche, wobei auf einem Halteelement (58) ein Verschlusselement (50) aufliegt, das über die Stufen (40, 42, 44) hinweg entlang der Stange und entlang des Schenkels (26) vertikal verschiebbar ist und von dem Schenkel (26) verdrehsicher gehalten ist, wobei das Verschlusselement Öffnungen (56) in der Kontur des Halteelements verschließt.

4. Pflanzengerüst (10) nach einem der vorhergehenden Ansprüche, wobei das Halteelement (82, 84) als eine Platte ausgestaltet ist, die beschriftbar ist oder als Unterlage für ein Etikett dient, auf dem ein das Halteelement am Rand umgreifendes Rahmenteil fixierend aufliegt, wobei das Etikett elastisch ist und dazu eingerichtet ist, an der Stange angesteckt zu sein.

5. Pflanzengerüst (100) nach einem der vorhergehenden Ansprüche, wobei das H-förmige Aufsatzteil (102) und das U-förmige Aufsatzteil (104) jeweils zwei horizontale Ausleger aufweisen, die eine Auflageebene definieren und die zusammenwirkend ein Halteelement (114) in der Auflageebene tragen, wobei der Stangenaufsatz (101) das Halteelement (114) im Bereich einer zentralen kreuzförmigen Ausnehmung (116) durchsetzt, das Halteelement in seiner Außenkontur Öffnungen (118, 120, 122, 124) zu labyrinthartigen Aussparungen (126) des Halteelements aufweist und die labyrinthartigen Aussparungen des Halteelements (114) dazu ausgebildet sind, Abschnitte (128, 130) von Pflanzentrieben unverlierbar zu halten und das Halteelement (114) selbst durch einen Ring mit kreuzförmiger Ausnehmung horizontal fixiert ist, deren Kontur in einer horizontalen Drehposition größenmäßig ausreicht, von den zusammengesteckten Aufsatzteilen (102) und (104) durchsetzt zu werden, so dass er zentral auf das Halteelement (114) aufgelegt werden und mittels Drehung mit seinen vier nach innen ansteigend breiter werdenden Flügeln in passgenaue Aussparungen (103, 105, 109) der Aufsatzteile bewegt werden kann, bis er durch leichte Spannung in seiner endgültigen Position einrastet.

6. Pflanzengerüst (140) nach einem der vorhergehenden Ansprüche, wobei das H-förmige Aufsatzteil (142) einen ersten bogenförmig verlängerten Schenkel (144) und einen bezüglich einer Mittenachse des H-förmigen Aufsatzteils dazu symmetrischen zweiten bogenförmig verlängerten Schenkel (146) aufweist und das U-förmige Aufsatzteil (152) eine bogenförmige Verlängerung (154) aufweist, wobei alle verlängerten Schenkel an ihrem distalen Ende eine gabelartige Greifvorrichtung mit einer zu der Stange hin gerichteten Öffnung aufweisen, die ein Halteelement tragen.

7. Pflanzengerüst (170) nach einem der vorhergehenden Ansprüche, umfassend einen Standfuß zum Stützen der Stange in einer vertikalen Ausrichtung, der Standfuß umfassend
- ein im Wesentlichen H-förmiges Fußteil (172) mit einem dritten Schlitz (176), einer dritten Aussparung (178) und einem zwischen dem dritten Schlitz (176) und der dritten Aussparung (178) ausgebildeten zweiten Verbindungssteg (180), wobei die dritte Aussparung (178) durch zwei dritte im Wesentlichen parallele Schenkel (182, 184) seitlich begrenzt ist, wobei die dritten Schenkel (182, 184) anhand des zweiten Verbindungsstegs miteinander verbunden sind und wobei sich der dritte Schlitz (176) und die dritte Aussparung (178) ausgehend von dem zweiten Verbindungssteg (180) in zueinander entgegengesetzte Richtungen erstrecken, und
- ein im Wesentlichen U-förmiges Fußteil (174) mit einer vierten Aussparung (186) und einem von dieser ausgehenden vierten Schlitz (188), wobei die vierte Aussparung durch zwei vierte im Wesentlichen parallele Schenkel (190, 192) seitlich begrenzt ist,
wobei das H-förmige Fußteil und das U-förmige Fußteil flach sind und wobei das H-förmige Fußteil dazu eingerichtet ist, auf einem zweiten Ende der Stange (16) aufgesteckt zu sein und auf dem U-förmigen Fußteil das H-förmigen Fußteil überkreuzt aufgesteckt ist, so dass sich der dritte Schlitz (176) mit dem vierten Schlitz (188) in Eingriff befindet, wobei die beiden dritten Schenkel und die beiden vierten Schenkel eine zweite Einfassung bilden, damit die Stange in dieser zweiten Einfassung von den dritten und vierten Schenkeln an ihrem Umfang einzuspannen ist.

8. Pflanzengerüst (270) nach einem der vorhergehenden Ansprüche, umfassend einen Verbindungsadapter, der ein erstes und ein zweites im Wesentlichen H-förmiges Verbindungsteil (272, 274) umfasst, wobei das erste H-förmige Verbindungsteil (272) eine fünfte Aussparung (276), eine sechste Aussparung (278) und einen fünften Schlitz (280) aufweist und das zweite H-förmige Verbindungsteil (274) eine siebte Aussparung (282), eine achte Aussparung (284) und einen sechsten Schlitz (286) aufweist, wobei die fünfte Aussparung (276) durch zwei im Wesentlichen parallele fünfte Schenkel (288, 290), die sechste Aussparung (278) durch zwei im Wesentlichen parallele sechste Schenkel (292, 294), die siebte Aussparung (282) durch zwei im Wesentlichen parallele siebte Schenkel (296, 298) und die achte Aussparung (284) durch zwei im Wesentlichen parallele achte Schenkel (300, 302) seitlich begrenzt ist, wobei die Innenkonturen des ersten und des zweiten H-förmigen Verbindungsteils (272, 274) bezüglich einer gemeinsamen Mittensymmetrieachse symmetrisch sind und wobei das erste und das zweite H-förmige Verbindungsteil überkreuzt zusammengesteckt sind, wobei auf dem ersten H-förmigen Verbindungsteil (272) das zweite H-förmige Verbindungsteil (274) gegenüber dem ersten H-förmigen Verbindungsteil überkreuzt aufgesteckt ist, so dass sich der fünfte Schlitz (280) mit dem sechsten Schlitz (286) in Eingriff befindet, wobei die beiden sechsten Schenkel (292, 294) und die beiden achten Schenkel (300, 302) eine dritte Einfassung bilden, damit die Stange in dieser dritten Einfassung fest einzuspannen ist, und wobei die beiden fünften Schenkel (288, 290) und die beiden siebten Schenkel (296, 298) eine zusätzliche Einfassung bilden, damit eine zusätzliche Stange von den fünften und siebten Schenkeln an ihrem Umfang fest einzuspannen ist, wobei der Verbindungsadapter ein Halteelement (320) mit mehreren hakenförmigen Greifern (322, 324, 326, 328) und mehreren Öffnungen (330, 332, 334, 336) sowie einer im Wesentlichen kreuzförmigen zentralen Aussparung (340) umfasst, wobei die Aussparung dazu ausgeformt ist, den Verbindungsadapter und die Stange hindurch ragend aufzunehmen und wobei das erste und das zweite H-förmige Verbindungsteil stufenartige Verbreiterungen (310, 312, 314, 316) aufweisen, die dazu eingerichtet sind, das Halteelement (320) zu tragen.

9. Pflanzengerüst zum Stützen von Pflanzen, umfassend einen Stangenaufsatz (400) zum Stützen von zumindest einem Pflanzengefäß, der dazu eingerichtet ist, eine längliche vertikal ausrichtbare Stange (16) und zumindest ein Pflanzengefäß aufzunehmen, der Stangenaufsatz (400) umfassend
- ein im Wesentlichen H-förmiges Aufsatzteil (418) mit einem ersten Schlitz (420), einer ersten Aussparung (422) und einem zwischen dem ersten Schlitz und der ersten Aussparung ausgebildeten ersten Verbindungssteg (424), wobei die erste Aussparung (422) durch zwei erste im Wesentlichen parallele Schenkel (426, 428) seitlich begrenzt ist, wobei die ersten Schenkel (426, 428) durch den ersten Verbindungssteg (424) miteinander verbunden sind und wobei sich der erste Schlitz (420) und die erste Aussparung (422) ausgehend von dem ersten Verbindungssteg (424) in zueinander entgegengesetzte Richtungen erstrecken, und
- ein im Wesentlichen U-förmiges Aufsatzteil (430) mit einer zweiten Aussparung (432) und einem sich von dieser erstreckenden zweiten Schlitz (434), wobei die zweite Aussparung (432) durch zwei zweite im Wesentlichen parallele Schenkel (436, 438) seitlich begrenzt ist, welche über einen zweiten Verbindungssteg (433) miteinander verbunden sind,
wobei das H-förmige Aufsatzteil (418) und das U-förmige Aufsatzteil (430) flach sind, wobei das H-förmige Aufsatzteil (418) dazu eingerichtet ist, auf einem ersten Ende der Stange (16) aufgesteckt zu sein und auf dem H-förmigen Aufsatzteil (418) das U-förmige Aufsatzteil (430) gegenüber dem H-förmigen Aufsatzteil überkreuzt aufgesteckt ist, so dass sich der erste Schlitz (420) mit dem zweiten Schlitz (434) in Eingriff befindet, wobei die beiden ersten Schenkel (426, 428) und die beiden zweiten Schenkel (436, 438) eine erste Einfassung bilden, damit die Stange (16) in dieser ersten Einfassung von den ersten und zweiten Schenkeln an ihrem Umfang fest einzuspannen ist und
wobei das H-förmige Aufsatzteil und/oder das U-förmige Aufsatzteil jeweils mindestens zwei bogenförmige, sich seitlich von dem ersten und zweiten Verbindungssteg (424, 433) erstreckende Stützarme (440, 442, 444, 446) aufweist, welche im zusammengesteckten Zustand eine weitere Einfassung für das zu stützende Pflanzengefäß bilden.

10. Pflanzengerüst nach Anspruch 9, wobei sowohl das H-förmige Aufsatzteil (418) als auch das U-förmige Aufsatzteil (430) zwei Stützarme (440, 442, 444, 446) aufweist, um ein Verlagern des zu stützenden Pflanzengefäßes in zwei zueinander senkrechten horizontalen Richtungen zu begrenzen.

11. Pflanzengerüst nach Anspruch 9, ferner umfassend zumindest zwei Stützbögen (460) mit einer Basis (462) und jeweils zwei sich von der Basis (462) erstreckenden Stützschenkeln (464, 466),
wobei im Bereich der Basis (462) der Stützbögen (460) jeweils ein weiterer Schlitz (468) ausgebildet ist,
wobei in jedem der Stützarme (444, 446) des U-förmigen Aufsatzteils ein weiterer Schlitz (470) ausgebildet ist,
wobei im U-förmigen Aufsatzteil (430) und im H-förmigen Aufsatzteil (418) im Bereich des ersten und zweiten Verbindungsstegs auf einer der jeweiligen Aussparung entgegengesetzten Seite ein Fortsatz (472, 474) ausgebildet ist, und
wobei sich der Schlitz (468) jedes der Stützbögen (460) mit jeweils einem der in den Stützarmen ausgebildeten Schlitze (470) in Eingriff befindet und dadurch die Stützbögen (460), die Stützarme (444, 446) und die Fortsätze (472, 474) zusammen zwei Einfassungen bilden, wobei in jeder der beiden Einfassungen ein Verlagern eines zu stützenden Pflanzengefäßes in zwei zueinander senkrechten Richtungen begrenzt ist.

12. Pflanzengerüstsystem, umfassend
- mindestens ein Pflanzengerüst nach einem der Ansprüche 1 bis 6 oder 8 bis 11,
- zwei oder mehrere gleiche flache Standfußbänder, die auf einer Längskante aufgestellt und einander kreuzend angeordnet sind, wobei die Standfußbänder an ihren Kreuzungen vertikale Schlitze aufweisen, die Schlitze sich kreuzender Standfußbänder ineinander greifen und an einer oder mehreren Kreuzungen jeweils ein Pflanzengerüst aufgesteckt ist.

13. Verwendung eines Pflanzengerüsts nach Anspruch 1 bis 4 und 7 bis 9 oder eines Pflanzengerüstsystems nach Anspruch 9 zum Lokalisieren und Markieren einer Pflanze oder mehrerer Pflanzen, wobei ein Etikett auf dem Halteelement positioniert ist, das Etikett umfassend einen Klemmabschnitt, der dazu eingerichtet ist, die Stange teilweise zu umgreifen, und an die Stange ansteckbar und von der Stange abziehbar ist, auf dem ein darüber höhenbewegliches Rahmenteil aufliegt.

## Claims

1. A plant support frame (10, 100, 140, 170, 270) for supporting plants, comprising a rod attachment (12) for supporting flat holding elements (14) adapted for receiving an elongate vertically adjustable rod (16), said rod attachment (12) comprising:
- a substantially H-shaped attachment member (18) having a first slot (20), a first recess (22) and a first connecting web (24) formed between the first slot and the first recess, wherein the first recess (22) is laterally defined by two first substantially parallel legs (26, 28), wherein the first legs (26, 28) are connected to each other by means of the first connecting web (24), and wherein the first slot (20) and the first recess (22) extend from the first connecting web (24) in opposite directions; and
- a substantially U-shaped attachment member (30) having a second recess (32) and a second slot (34) extending therefrom, wherein the second recess (32) is laterally defined by two second substantially parallel legs (36, 38);
wherein the H-shaped attachment member (18) and the U-shaped attachment member (30) are flat; and
wherein the H-shaped attachment member (18) is adapted for attachment to a first end of the rod (16), and the U-shaped attachment member (30) is attached to the H-shaped attachment member (18) in a crosswise manner relative to the H-shaped attachment member so that the first slot (20) engages the second slot (34), wherein the two first legs (26, 28) and the two second legs (36, 38) form a first enclosure so that the rod (16) is to be firmly locked at its periphery in this first enclosure by the first and second legs.

2. The plant support frame (10) according to claim 1, wherein spaced apart steps (40, 42, 44) are formed on one of the legs of the U-shaped attachment member (36, 38) or the H-shaped attachment member (26, 28), wherein the holding elements (14) rest on said steps, and the holding elements (14) each comprise one recess (46) adapted for receiving the rod (16) and the leg in a manner protruding therethrough, thereby holding the holding elements (14) horizontally, and wherein the holding elements (14) comprise one or more hook-shaped portions (48) for fixing parts of plant shoots.

3. The plant support frame (10) according to one of the preceding claims, wherein a closing element (50) rests on a holding element (58), which closing element is vertically displaceable across the steps (40, 42, 44) along the rod and along the leg (26) and is held by the leg (26) in a torque-proof manner, wherein the closing element closes off openings (56) in the contour of the holding element.

4. The plant support frame (10) according to one of the preceding claims, wherein the holding element (82, 84) is shaped as a plate, which is inscribable or serves as a support for a label, wherein a frame member peripherally encompassing the holding element rests on the label in a fixing manner, wherein the label is elastic and adapted for attachment to the rod.

5. A plant support frame (100) according to one of the preceding claims, wherein the H-shaped attachment member (102) and the U-shaped attachment member (104) each comprise two horizontal beams, which define a support plane and cooperatively support a holding element (114) in the support plane, wherein the rod attachment (101) penetrates the holding element (114) in the area of a central cruciform recess (116), the holding element, in its outer contour, comprises openings (118, 120, 122, 124) to labyrinth-like recesses (126) of the holding element, and the labyrinth-like recesses of the holding element (114) are adapted for captively holding parts (128, 130) of plant shoots, and wherein the holding element (114) itself is horizontally fixed by a ring having a cruciform recess, the contour of which is sufficient in size in a horizontal rotational position to be penetrated by the assembled attachment members (102) and (104) so that the ring can be centrally applied to the holding element (114) and its four inwardly increasingly broadening wings can be moved, by means of rotation, into accurately fitting recesses (103, 105, 109) of the attachment members until it is engaged in its final position by means of slight tension.

6. A plant support frame (140) according to one of the preceding claims, wherein the H-shaped attachment member (142) comprises a first leg (144) elongated in an arcuate manner and a second leg (146) elongated in an arcuate manner being symmetrical thereto with respect to a central axis of the H-shaped attachment member, and the U-shaped attachment member (152) includes an arcuate elongation (154), wherein all elongated legs, at their distal ends, each comprise a fork-like gripping device with an opening facing the rod, which support a holding element.

7. A plant support frame (170) according to one of the preceding claims, comprising a foot for supporting the rod in a vertical orientation, said foot comprising:
- a substantially H-shaped foot member (172) having a third slot (176), a third recess (178) and a second connecting web (180) formed between the third slot (176) and the third recess (178), wherein the third recess (178) is laterally defined by two third substantially parallel legs (182, 184), wherein the third legs (182, 184) are connected to each other by means of the second connecting web, and wherein the third slot (176) and the third recess (178) extend from the second connecting web (180) in opposite directions;
- a substantially U-shaped foot member (174) having a fourth recess (186) and a fourth slot (188) extending therefrom, wherein the fourth recess is laterally defined by two fourth substantially parallel legs (190, 192);
wherein the H-shaped foot member and the U-shaped foot member are flat, and wherein the H-shaped foot member is adapted for attachment to a second end of the rod (16), and the H-shaped foot member is attached to the U-shaped foot member in a crosswise manner so that the third slot (176) engages the fourth slot (188), wherein the two third legs and the two fourth legs form a second enclosure so that the rod is to be locked at its periphery in this second enclosure by the third and fourth legs.

8. The plant support frame (270) according to one of the preceding claims, comprising a connection adapter including a first and a second substantially H-shaped connecting member (272, 274), wherein the first H-shaped connecting member (272) comprises a fifth recess (276), a sixth recess (278) and a fifth slot (280), and the second H-shaped connecting member (274) comprises a seventh recess (282), an eighth recess (284) and a sixth slot (286), wherein the fifth recess (276) is laterally defined by two substantially parallel fifth legs (288, 290), the sixth recess (278) is laterally defined by two substantially parallel sixth legs (292, 294), the seventh recess (282) is laterally defined by two substantially parallel seventh legs (296, 298), and the eighth recess (284) is laterally defined by two substantially parallel eighth legs (300, 302), wherein the inner contours of the first and second connecting members (272, 274) are symmetrical with respect to a common central axis of symmetry, and wherein the first and second connecting member are assembled in a crosswise manner, wherein the second H-shaped connecting member (274) is attached to the first H-shaped connecting member (272) in a crosswise manner relative to the first H-shaped connecting member so that the fifth slot (280) engages the sixth slot (286), wherein the two sixth legs (292, 294) and the two eighth legs (300, 302) form a third enclosure so that the rod is firmly locked in this third enclosure, and wherein the two fifth legs (288, 290) and the two seventh legs (296, 298) form an additional enclosure so that an additional rod is to be firmly locked at its periphery by the fifth and seventh legs, wherein the connection adapter comprises a holding element (320) having a plurality of hook-shaped grippers (322, 324, 326, 328) and a plurality of openings (330, 332, 334, 336) as well as a substantially cruciform central recess (340), wherein the recess is adapted for receiving the connection adapter and the rod in a manner protruding therethrough, and wherein the first and second H-shaped connecting members comprise step-like enlargements (310, 312, 314, 316) adapted for supporting the holding element (320).

9. A plant support frame for supporting plants, comprising a rod attachment (400) for supporting at least one plant vessel adapted for receiving an elongate vertically adjustable rod (16) and at least one plant vessel, the rod attachment (400) comprising:
- a substantially H-shaped attachment member (418) having a first slot (420), a first recess (422) and a first connecting web (424) formed between the first slot and the first recess, wherein the first recess (422) is laterally defined by two first substantially parallel legs (426, 428), wherein the first legs (426, 428) are connected to each other by the first connecting web (424), and wherein the first slot (420) and the first recess (422) extend from the first connecting web (424) in opposite directions; and
- a substantially U-shaped attachment member (430) having a second recess (432) and a second slot (434) extending therefrom, wherein the second recess (432) is laterally defined by two second substantially parallel legs (436, 438) connected to each other by a second connecting web (443);
wherein the H-shaped attachment member (418) and the U-shaped attachment member (430) are flat,
wherein the H-shaped attachment member (418) is adapted for attachment to the first end of the rod (16), and the U-shaped attachment member (430) is attached to the H-shaped attachment member (418) in a crosswise manner relative to the H-shaped attachment member so that the first slot (420) engages the second slot (434), wherein the two first legs (426, 428) and the two second legs (436, 438) form a first enclosure so that the rod (16) is to be firmly locked at its periphery in this first enclosure by the first and second legs; and
wherein the H-shaped attachment member and/or the U-shaped attachment member each comprise at least two arcuate supporting arms (440, 442, 444, 446) extending laterally from the first and second connecting webs (424, 433), which supporting arms, in the assembled state, form a further enclosure for the plant vessel to be supported.

10. The plant support frame according to claim 9, wherein both the H-shaped attachment member (418) and the U-shaped attachment member (430) comprise two supporting arms (440, 442, 444, 446) for limiting displacement of the plant vessel to be supported in two horizontal directions perpendicular to each other.

11. The plant support frame according to claim 9, further comprising at least two supporting arcs (460) having a base (462) and two respective supporting legs (464, 466) extending from the base (462);
wherein a further slot (468) is formed in the area of the base (462) of the supporting arcs (460) in each case;
wherein a further slot (470) is formed in each one of the supporting arms (444, 446) of the H-shaped attachment member;
wherein one extension (472, 474) each is formed in the U-shaped attachment member (430) and in the H-shaped attachment member (418) in the area of the first and second connecting webs on a side opposite to the respective recess; and
wherein the slot (468) of each supporting arc (460) engages a respective one of the slots (470) formed in the supporting arms so that the supporting arcs (460), the supporting arms (444, 446) and the extensions (472, 474) collectively form two enclosures, wherein, in each one of the two enclosures, displacement of a plant vessel to be supported is limited in two directions perpendicular to each other.

12. A plant support frame system, comprising:
- at least one plant support frame according to any one of claims 1 to 6 or 8 to 11,
- two or more identical flat foot straps, which are positioned on a longitudinal edge and arranged in a in intersecting manner, wherein the foot straps comprise vertical slots at their intersections, wherein the slots of intersecting foot straps engage each other, and wherein one plant support frame each is attached at one or more of the intersections.

13. The use of a plant support frame according to claims 1 to 4 and 7 to 9, or of a plant support frame system according to claim 9, for locating and marking a plant or a plurality of plants, wherein a label is positioned on the holding element, the label comprising a clamping portion adapted for partially encompassing the rod and attachable to the rod and removable from the rod, wherein a frame member movable in height above the label rests thereon.

## Revendications

1. Support pour plante (10, 100, 140, 170, 270), comportant une garniture de tige (12) destinée au support d'éléments de retenue (14) plats et conçue pour recevoir une tige (16) allongée et orientable verticalement, ladite garniture de tige (12) comportant
- une coiffe (18) essentiellement en forme de H, comprenant une première fente (20), un premier évidement (22) et une zone de liaison (24) formée entre la première fente et le premier évidement, le premier évidement (22) étant délimité latéralement par deux premières branches (26, 28) sensiblement parallèles, les premières branches (26, 28) étant reliées l'une à l'autre par l'intermédiaire de ladite première zone de liaison (24), et la première fente (20) et le premier évidement (22) s'étendant dans des directions opposées l'une par rapport à l'autre à partir de la première zone de liaison (24), et
- une coiffe (30) essentiellement en forme de U, comprenant un deuxième évidement (32) et, partant de celui-ci, une deuxième fente (34), le deuxième évidement (32) étant délimité latéralement par deux deuxièmes branches (36, 38) sensiblement parallèles,
la coiffe en forme de H (18) et la coiffe en forme de U (30) étant plates, et
la coiffe en forme de H (18) étant conçue pour être montée sur une première extrémité de la tige (16), et la coiffe en forme de U (30) étant montée en croix sur la coiffe en forme de H (18) si bien que la première fente (20) se trouve en prise avec la deuxième fente (34), les deux premières branches (26, 28) et les deux deuxièmes branches (36, 38) formant un premier encastrement pour que la tige (16) soit maintenue serrée sur son pourtour par les premières et les deuxièmes branches de ce premier encastrement.

2. Support pour plante (10) selon la revendication 1, des ergots (40, 42, 44) espacés les uns des autres, sur lesquels reposent lesdits éléments de retenue (14), étant formés sur une des branches (36, 38) de la coiffe en forme de U ou sur une des branches (26, 28) de la coiffe en forme de H, et les éléments de retenue (14) présentant respectivement un évidement (46) conçu pour recevoir et laisser passer la tige (16) et la branche de manière traversante, de sorte que les éléments de retenue (14) sont maintenus horizontalement, et les éléments de retenue (14) présentant un ou plusieurs segments (48) en forme de crochet pour fixer des parties de jeunes pousses.

3. Support pour plante (10) selon l'une des revendications précédentes, un élément de fermeture (50) reposant sur un élément de retenue (58), ledit élément de fermeture pouvant être déplacé verticalement d'un ergot (40, 42, 44) à l'autre le long de la tige et de la branche (26) et être maintenu fixe en rotation par la branche (26), cet élément de fermeture fermant les ouvertures (56) dans le contour de l'élément de retenue.

4. Support pour plante (10) selon l'une des revendications précédentes, l'élément de retenue (82, 84) étant réalisé sous la forme d'une plaque pouvant recevoir une inscription ou servir de support à une étiquette sur laquelle repose un élément cadre servant à fixer l'étiquette et enserrant le bord de l'élément de retenue, l'étiquette étant élastique et conçue pour être accrochée à la tige.

5. Support pour plante (100) selon l'une des revendications précédentes, la coiffe en forme de H (102) et la coiffe en forme de U (104) présentant respectivement deux bras horizontaux qui définissent un plan d'appui et supportent de manière coopérante un élément de retenue (114) dans ledit plan d'appui, la garniture de tige (101) traversant l'élément de retenue (114) dans la zone d'un évidement (116) central cruciforme, l'élément de retenue présentant dans son contour extérieur des ouvertures (118, 120, 122, 124) sur des évidements (126) en forme de labyrinthe ménagés à l'intérieur de l'élément de retenue, ces évidements en forme de labyrinthe de l'élément de retenue (114) étant conçus pour retenir de manière imperdable des parties (128, 130) de jeunes pousses, et l'élément de retenue (114) étant lui-même fixé horizontalement par un anneau doté d'un évidement cruciforme dont le contour, dans une première position de rotation, s'avère de par sa taille suffisant pour laisser passer les coiffes (102) et (104) assemblées si bien qu'il peut être posé de manière centrale sur l'élément de retenue (114) et, par rotation, à l'aide de ses quatre ailes croissantes vers l'intérieur et s'élargissant, être déplacé dans des évidements (103, 105, 109) sans jeu des coiffes jusqu'à ce qu'il atteigne sa position finale par encliquetage sous l'effet d'une légère tension.

6. Support pour plante (140) selon l'une des revendications précédentes, la coiffe en forme de H (142) présentant une première branche prolongée en forme d'arc (144) et une deuxième branche (146) prolongée en forme d'arc et symétrique par rapport à un axe médian de la coiffe en forme de H, et la coiffe en forme de U (152) présentant un prolongement curviligne (154), toutes les branches prolongées, qui supportent un élément de retenue, présentant à leur extrémité distale un dispositif de retenue en forme de fourchette doté d'une ouverture orientée vers la tige.

7. Support pour plante (170) selon l'une des revendications précédentes, comprenant un pied pour supporter la tige dans une orientation verticale, ce pied comportant
- une embase de pied (172) essentiellement en forme de H, comprenant une troisième fente (176), un troisième évidement (178) et une deuxième zone de liaison (180) formée entre la troisième fente (176) et le troisième évidement (178), le troisième évidement (178) étant délimité latéralement par deux troisièmes branches (182, 184) sensiblement parallèles, les troisièmes branches (182, 184) étant reliées l'une à l'autre par l'intermédiaire de ladite deuxième zone de liaison, et la troisième fente (176) et le troisième évidement (178) s'étendant dans des directions opposées l'une par rapport à l'autre à partir de la deuxième zone de liaison (180), et
- une embase de pied (174) essentiellement en forme de U, comprenant un quatrième évidement (186) et, partant de celui-ci, une quatrième fente (188), le quatrième évidement étant délimité latéralement par deux quatrièmes branches (190, 192) sensiblement parallèles,
l'embase de pied en forme de H et l'embase de pied en forme de U étant plates, et l'embase de pied en forme de H étant conçue pour être montée sur une deuxième extrémité de la tige (16), et l'embase de pied en forme de H étant montée en croix sur l'embase de pied en forme de U si bien que la troisième fente (176) se trouve en prise avec la quatrième fente (188), les deux troisièmes branches et les deux quatrièmes branches formant un deuxième encastrement pour que la tige (16) soit maintenue serrée sur son pourtour par les troisièmes et les quatrièmes branches de ce deuxième encastrement.

8. Support pour plante (270) selon l'une des revendications précédentes, comprenant un adaptateur de liaison qui comporte une première et une deuxième pièce de liaison essentiellement en forme de H (272, 274), la première pièce de liaison en forme de H (272) présentant un cinquième évidement (276), un sixième évidement (278) et une cinquième fente (280), et la deuxième pièce de liaison en forme de H (274) présentant un septième évidement (282), un huitième évidement (284) et une sixième fente (286), le cinquième évidement (276) étant délimité latéralement par deux cinquièmes branches sensiblement parallèles (288, 290), le sixième évidement (278) par deux sixièmes branches (292, 294) sensiblement parallèles, le septième évidement (282) par deux septièmes branches sensiblement parallèles (296, 298) et le huitième évidement (284) par deux huitièmes branches (300, 302) sensiblement parallèles, les contours intérieurs de la première et de la deuxième pièce de liaison en forme de H (272, 274) étant symétriques par rapport à un axe médian de symétrie commun, et la première et la deuxième pièce de liaison en forme de H étant montées en croix, la deuxième pièce de liaison en forme de H (274) étant montée en croix sur la première pièce de liaison en forme de H (272) si bien que la cinquième fente (280) se trouve en prise avec la sixième fente (286), les deux sixièmes branches (292, 294) et les deux huitièmes branches (300, 302) formant un troisième encastrement pour que la tige soit maintenue serrée dans ce troisième encastrement, et les deux cinquièmes branches (288, 290) et les deux septièmes branches (296,298) formant un encastrement supplémentaire pour qu'une tige supplémentaire soit maintenue serrée sur son pourtour par les cinquièmes et les septièmes branches, l'adaptateur de liaison comprenant un élément de retenue (320) muni de plusieurs griffes de retenue (322, 324, 326, 328) en forme de crochet et de plusieurs ouvertures (330, 332, 334, 336) ainsi que d'un évidement central sensiblement cruciforme (340), l'évidement étant formé pour recevoir et laisser passer l'adaptateur de liaison et la tige de manière traversante, et la première et la deuxième pièce en forme de H présentant des élargissements sous forme d'ergots (310, 312, 314, 316) qui sont conçus pour supporter l'élément de retenue (320).

9. Support pour plante, comportant une garniture de tige (400) destinée au support d'au moins un récipient à plantes et conçue pour recevoir une tige (16) allongée verticalement orientable et au moins un récipient à plantes, ladite garniture de tige (400) comportant
- une coiffe essentiellement en forme de H (418), comprenant une première fente (420), un premier évidement (422) et une zone de liaison (424) formée entre la première fente et le premier évidement, le premier évidement (422) étant délimité latéralement par deux premières branches (426, 428) sensiblement parallèles, les premières branches (426, 428) étant reliées l'une à l'autre par l'intermédiaire de ladite première zone de liaison (424), et la première fente (420) et le premier évidement (422) s'étendant dans des directions opposées l'une par rapport à l'autre à partir de la première zone de liaison (424), et
- une coiffe essentiellement en forme de U (430), comprenant un deuxième évidement (432) et, partant de celui-ci, une deuxième fente (434), le deuxième évidement (432) étant délimité latéralement par deux deuxièmes branches (436, 438) sensiblement parallèles, lesquelles sont reliées l'une à l'autre par une deuxième zone de liaison (433),
la coiffe en forme de H (418) et la coiffe en forme de U (430) étant plates, la coiffe en forme de H (418) étant conçue pour être montée sur une première extrémité de la tige (16), et la coiffe en forme de U (430) étant montée en croix sur la coiffe en forme de H (418) si bien que la première fente (420) se trouve en prise avec la deuxième fente (434), les deux premières branches (426, 428) et les deux deuxièmes branches (436, 438) formant un premier encastrement pour que la tige (16) soit maintenue serrée sur son pourtour par les premières et les deuxièmes branches de ce premier encastrement, et la coiffe en forme de H et/ou la coiffe en forme de U présentant respectivement au moins deux bras de soutien (440, 442, 444, 446) curvilignes et s'étendant latéralement à partir de la première et de la deuxième zone de liaison (424, 433), lesquels bras de soutien forment à l'état assemblé un encastrement supplémentaire pour le récipient à plantes à supporter.

10. Support pour plante selon la revendication 9, aussi bien la coiffe en forme de H (418) que la coiffe en forme de U (430) présentant deux bras de soutien (440, 442, 444, 446) pour limiter dans deux directions horizontales perpendiculaires l'une par rapport à l'autre un déplacement du récipient à plantes à supporter.

11. Support pour plante selon la revendication 9, comprenant en outre au moins deux arceaux de soutien (460) comprenant chacun une base (462) et deux bras de soutien (464, 466) s'étendant depuis ladite base (462),
une fente supplémentaire (468) étant réalisée dans la région de la base (462) de chaque bras de soutien,
une fente supplémentaire (470) étant réalisée dans chacun des bras de soutien (444, 446) de la coiffe en forme de U,
un prolongement (472, 474) étant réalisé dans la coiffe en forme de U (430) et dans la coiffe en forme de H (418), dans la région de la première et de la deuxième zone de liaison, sur un côté opposé à chaque évidement, et
la fente (468) de chacun des arceaux de soutien (460) se trouvant respectivement en prise avec une des fentes (470) réalisées dans les bras de soutien, et les arceaux de soutien (460), les bras de soutien (444, 446) et les prolongements (472, 474) formant ainsi conjointement deux encastrements, le déplacement d'un récipient à plantes à supporter à l'intérieur de chacun des deux encastrements étant ainsi limité dans deux directions perpendiculaires l'une par rapport à l'autre.

12. Système de support pour plante, comprenant
- au moins un support pour plante selon l'une des revendications 1 à 6 ou 8 à 11,
- deux ou plusieurs bandeaux de pied plats et identiques qui sont dressés sur un chant longitudinal et agencés en croix, les bandeaux de pied présentant des fentes verticales à leurs intersections, les fentes des bandeaux de pied agencés en croix étant en prise les unes avec les autres et un support pour plante étant respectivement monté à une ou plusieurs intersections.

13. Utilisation d'un support pour plante selon les revendications 1 à 4 et 7 à 9 ou d'un système de support pour plante selon la revendication 9 pour localiser et marquer une ou plusieurs plantes, une étiquette étant placée sur l'élément de retenue, cette étiquette comprenant un segment d'accrochage conçu pour entourer partiellement la tige et pouvant être accrochée à la tige et enlevée de la tige, sur laquelle étiquette repose un élément cadre qui peut être déplacé en hauteur.
